(19) **Europäisches Patentamt**
**European Patent Office**
**Office européen des brevets**

(11) **EP 4 300 040 B1**

(12) **EUROPEAN PATENT SPECIFICATION**

(45) Date of publication and mention
of the grant of the patent:
**29.07.2026  Bulletin 2026/31**

(51) International Patent Classification (IPC):
***G01C 19/5747*** *(2012.01)*

(52) Cooperative Patent Classification (CPC):
**G01C 19/5747**

(21) Application number: **23180883.3**

(22) Date of filing: **22.06.2023**

(54) **MEMS GYROSCOPE WITH ENHANCED ROBUSTNESS AGAINST VIBRATIONS AND REDUCED DIMENSIONS**

MEMS-GYROSKOP MIT VERBESSERTER ROBUSTHEIT GEGENÜBER VIBRATIONEN UND REDUZIERTEN ABMESSUNGEN

GYROSCOPE MEMS PRÉSENTANT UNE ROBUSTESSE ACCRUE CONTRE LES VIBRATIONS ET DES DIMENSIONS RÉDUITES

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority:  **01.07.2022  IT 202200014050**

(43) Date of publication of application:
**03.01.2024  Bulletin 2024/01**

(60) Divisional application:
**26177003.6 / 4 779 264**

(73) Proprietor: **STMicroelectronics S.r.l.**
**20864 Agrate Brianza (MB) (IT)**

(72) Inventors:
• **FALORNI, Luca Giuseppe**
**20812 LIMBIATE (MB) (IT)**
• **FEDELI, Patrick**
**20030 SENAGO (MI) (IT)**
• **GATTERE, Gabriele**
**21040 CASTRONNO (VA) (IT)**
• **VALZASINA, Carlo**
**20060 GESSATE (MI) (IT)**
• **CARULLI, Paola**
**20144 MILANO (IT)**

(74) Representative: **Studio Torta S.p.A.**
**Via Viotti, 9**
**10121 Torino (IT)**

(56) References cited:
**WO-A1-02/066929     DE-A1- 102007 030 119**

**Description**

The present invention relates to a MEMS gyroscope with enhanced robustness against vibrations and reduced dimensions.

As known, a gyroscope made using MEMS ("Micro ElectroMechanical Systems") technology is formed in a die of semiconductor material, for example silicon, and comprises at least one movable mass suspended on a substrate and free to oscillate with respect to the substrate with one or more degrees of freedom.

The movable mass is generally coupled to a drive structure which causes an oscillation of the movable mass along a drive direction, and is coupled to the substrate by detection electrodes capable of detecting a displacement of the movable mass along a sense direction.

When the MEMS gyroscope rotates with an angular speed around a rotation axis perpendicular to the drive direction, the movable mass is subject to a Coriolis force directed along the sense direction, perpendicular to the rotation axis and to the drive direction. The measurement of the displacement of the movable mass therefore allows sensing of the external angular speed.

Current MEMS gyroscopes are of uniaxial, biaxial or triaxial type, configured to sense movement along one, two or three axes.

In all cases, they are generally sensitive to vibrations that are directed parallel to the sense and/or drive axis or axes and may cause spurious displacements and therefore generation of spurious signals. Such spurious signals are unwanted, as they cause a noise, and may affect the stability of the gyroscope.

In general, in fact, a sensor (specifically, a gyroscope) is considered stable when the output signal only depends on the quantity to be sensed, here the external rate.

In particular, for gyroscopes usable in the automotive field, it is desired that they are resistant to vibrations up to several tens of kHz ("robustness to vibrations").

To increase the sensing robustness, it is known to use multiple redundant structures, so as to make the device less sensitive to external vibrations.

However, doubling or even completely multiplying the gyroscope structure entails a very large size and does not always solve the problem.

WO 02/066929 discloses a MEMS gyroscope having a fixed structure, two movable masses, two drive assemblies and two drive elastic structures.

A similar MEMS gyroscope is disclosed by DE 10 2007 030119.

The aim of the present invention is to provide a gyroscope which has a high robustness against vibrations, with reduced size.

According to the present invention, a MEMS gyroscope is provided, as defined in the attached claims.

For a better understanding of the present invention, embodiments thereof are now described, purely by way of nonlimiting example, with reference to the attached drawings, wherein:

- Figure 1 is a schematic top view of an elementary structure of a MEMS gyroscope that does not belong to the invention, in rest condition;
- Figure 2 is a schematic top view of the elementary structure of Figure 1, in drive mode;
- Figure 3 is a schematic top view of the elementary structure of Figure 1, in sense mode;
- Figure 4 is a schematic top view of the elementary structure of Figure 1, in presence of vibrations directed along the drive direction;
- Figure 5 is a schematic top view of a MEMS gyroscope that does not belong to the invention, formed by two elementary structures of Figure 1;
- Figure 6 shows a possible implementation of the gyroscope of Figure 5, for sensing yaw movements;
- Figure 7 is a schematic top view of a MEMS gyroscope for sensing pitch/roll movements that does not belong to the invention,;
- Figure 8 shows a possible implementation of the gyroscope of Figure 7;
- Figure 9 shows a possible implementation of the gyroscope of Figure 5, for sensing yaw and pitch/roll movements (biaxial gyroscope);
- Figure 10 shows a block diagram of a system for controlling the parameters of a gyroscope;
- Figure 11 shows a block diagram of another system for controlling the parameters of a gyroscope;
- Figure 12 shows a block diagram of a signalling system using the system for controlling parameters of Figure 11;
- Figure 13 shows a block diagram of another signalling system using the control system of Figure 11;
- Figures 14A-14G show extremely simplified diagrams of different gyroscope configurations and of the accelerations acting thereon due to the Coriolis effect and to linear and/or rotational vibrations;
- Figure 15 is a schematic top view of a gyroscope that does not belong to the invention, using the principle illustrated in Figures 14D-14F;

- Figure 16 shows an enlarged view of the elementary structure of the gyroscope of Figure 15, with a representation of the movements in drive mode;
- Figure 17 shows the elementary structure of Figure 16, with a representation of the movements, in yaw sense mode;
- Figure 18 shows the elementary structure of Figure 16, with a representation of the movements, in pitch sense mode;
- Figure 19 is a schematic top view of a yaw and pitch biaxial gyroscope, that does not belong to the invention, incorporating the elementary structures shown in Figures 17 and 18, with a representation of the movements in drive mode;
- Figure 20 is a schematic top view of the gyroscope of Figure 19, with a representation of the movements in sense mode;
- Figure 21 shows a possible implementation of the gyroscope of Figures 19-20;
- Figure 22 is a schematic top view of another biaxial-type gyroscope representing a portion of the gyroscope of figures 24-26, with a representation of the movements in drive mode;
- Figure 23A shows an enlarged view of the elementary structure of the gyroscope of Figure 22, with a representation of the elastic couplings and of the drive movements;
- Figure 23B is a schematic top view of the gyroscope of Figure 22, with a representation of the movements in sense mode;
- Figure 24 is a schematic top view of a gyroscope based on the solution of Figure 22, with a representation of the drive movements;
- Figure 25 is a schematic top view of the gyroscope of Figure 24, with a representation of the yaw/roll sense movements; and
- Figure 26 shows a possible implementation of the gyroscope of Figures 24 and 25.

The following description refers to the arrangement as shown; consequently, expressions such as "above", "below", "top", "bottom", "right", "left", "high", "low", "clockwise", "counterclockwise" relate to the attached Figures and are not to be intended in a limiting manner.

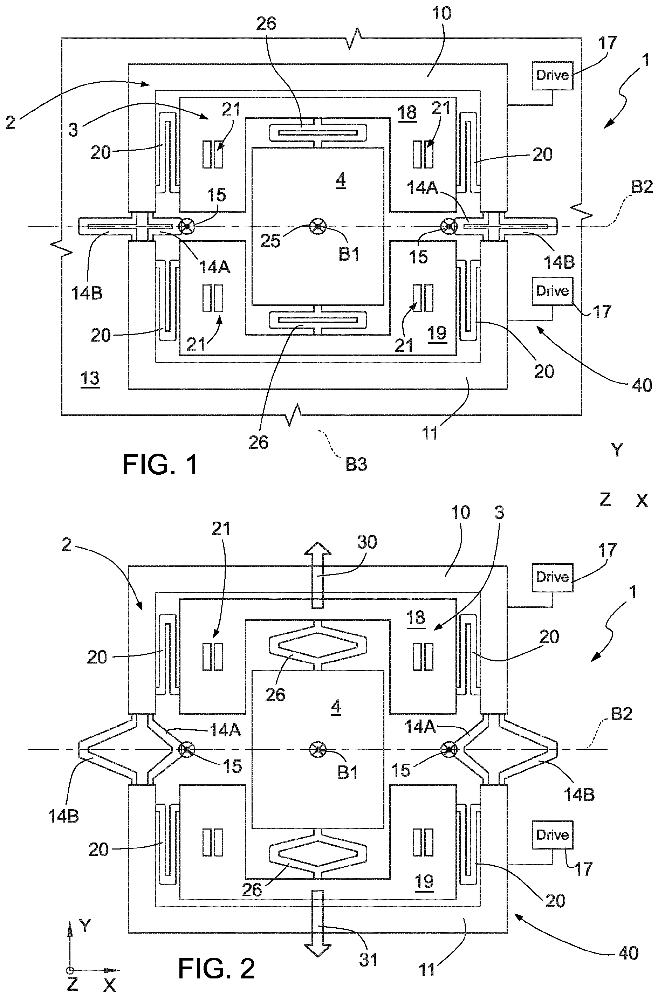

Figure 1 shows a gyroscope 1 that does not belong to the invention, made using MEMS technology and having a substantially planar structure, with main extension in a horizontal plane XY of an inertial reference system XYZ.

The gyroscope 1 is of a uniaxial type, for sensing yaw, that is rotations of the gyroscope 1 around an axis perpendicular to the horizontal plane XY (vertical axis Z of the inertial reference system XYZ).

The gyroscope 1 of Figure 1 comprises a gyroscope unit 40 having a first barycentric axis B1, parallel to the vertical axis Z, a second barycentric axis B2, parallel to a first horizontal axis X, and a third barycentric axis B3, parallel to a second horizontal axis Y of the inertial reference system XYZ.

The gyroscope 1 substantially has a three-level architecture, symmetrical with respect to the second and the third barycentric axes B2, B3 and including a drive structure 2; a Coriolis structure 3 and a sense mass 4.

The drive structure 2, the Coriolis structure 3 and the sense mass 4 extend mainly in the plane XY (along the first and the second horizontal axes X, Y) and have a thickness (measured parallel to the vertical axis Z) negligible with respect to other dimensions.

The drive structure 2 comprises two frames 10, 11 (hereinafter also referred to as first and second frame 10, 11, where it is necessary to distinguish them), here approximately C-shaped, arranged with the respective concavities facing each other, symmetrically to the second barycentric axis B2.

The frames 10, 11 are coupled to a support 13 (for example a substrate of a semiconductor die forming part of a fixed structure) through first springs 14A; the first and the second frames 10, 11 are also elastically coupled to each other through frame coupling springs 14B. The first springs 14A and the frame coupling springs 14B allow the suspension of the frames 10, 11 on the support 13 (through a respective anchoring point 15) and allow the frames 10, 11 to move (drive movement) only in one drive direction, here parallel to the second horizontal axis Y.

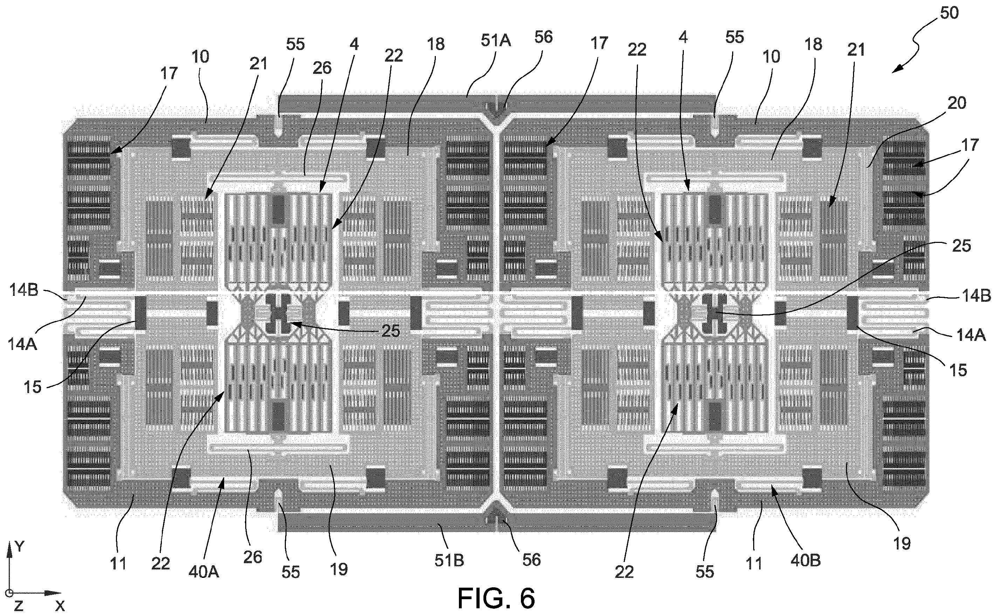

Actuation assemblies (shown only schematically at 17 in Figures 1-4 and shown for example in Figure 6), for example of capacitive electrostatic type, are coupled to the frames 10, 11 to control the drive movement of the frames 10, 11 in a drive direction, in phase opposition to each other, as indicated in Figure 2 by arrows 30, 31 and as described in more detail below. For example, the actuation assemblies 17 are coupled between each frame 10, 11 and the support 13, in a per se known manner.

The Coriolis structure 3 comprises two Coriolis masses 18, 19, here also approximately C-shaped and arranged, symmetrically to the second and the third barycentric axes B2, B3, inside the concavities of the frames 10, 11, with the respective concavities facing each other. In other words, here, each Coriolis mass 18, 19 is surrounded on three sides by a respective frame 10, 11.

Furthermore, in Figure 1, each Coriolis mass 18, 19 is formed by three sides arranged at right angles with respect to those adjacent, parallel to corresponding sides of the respective frame 10, 11.

Each Coriolis mass 18, 19 is coupled to a respective frame 10, 11 through second springs 20 which allow a mutual movement between the frames 10, 11 and the respective Coriolis mass 18, 19 only in a direction parallel to the second horizontal axis Y (sense movement).

The sense mass 4 here extends inside both concavities of the Coriolis masses 18, 19. In Figure 1, the sense mass has a generally quadrilateral shape, with sides parallel to the sides of the Coriolis masses 18, 19 and of the frames 10, 11.

The sense mass 4 is anchored to the support 13 here in central position through a sense elastic anchoring system 25 (shown schematically) which allows the rotation of the sense mass 4 around a rotation axis (here, the first barycentric axis B1).

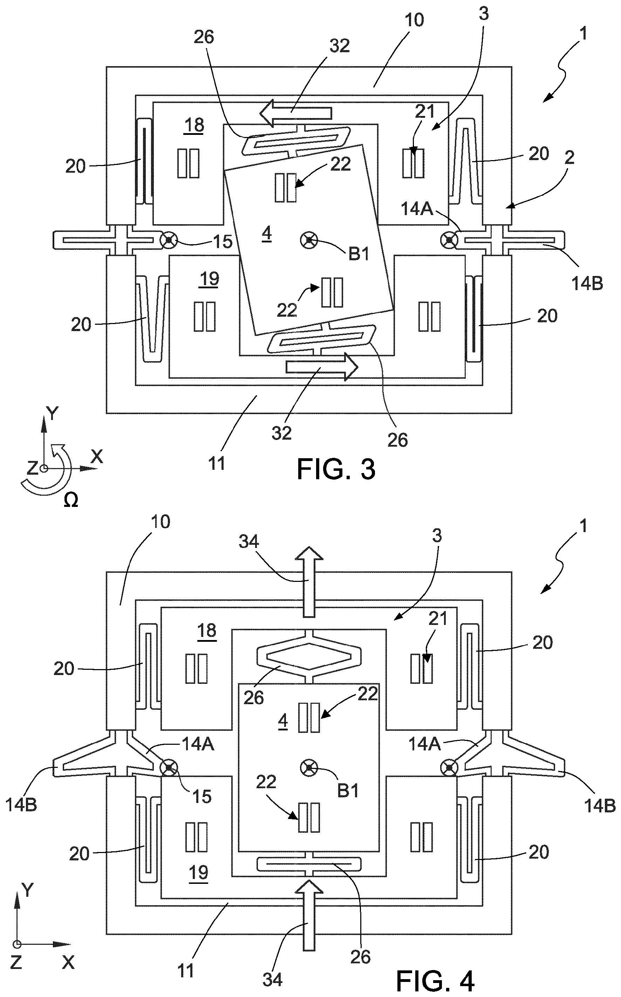

Furthermore, the sense mass 4 is elastically coupled to the Coriolis masses 18, 19 through respective third springs 26 which allow a relative movement between the Coriolis masses 18, 19 and the sense mass 4 in the direction of the second horizontal axis Y (to decouple the drive movement of the Coriolis masses 18, 19 from the sense mass 4, as shown in Figure 2) and couple the Coriolis masses 18, 19 to the sense mass 4 during the sense movement (to cause the rotation of the sense mass 4 in a sense mode, as shown in Figure 3 and discussed below).

The gyroscope 1 also has quadrature compensation structures 21, shown only schematically and of known type; for example, each Coriolis mass 18, 19 may be capacitively coupled to compensation electrodes integral with the support 13.

The gyroscope also has a sense structure 22, schematically indicated in Figure 3 and shown in Figure 6, able to sense the angular position of the sense mass 4. For example, the sense mass 4 may be capacitively coupled to fixed electrodes, carried by the support 13.

The gyroscope 1 of Figure 1 operates as follows (hereinafter, the movements caused by the actuation and the Coriolis force are described separately as drive mode and sense mode; as obvious to the person skilled in the art and discussed below, the sense movement occurs only when the gyroscope 1 is driven along the drive direction).

With reference to Figure 2 and as indicated above, in the drive mode, the frames 10, 11 are operated by applying drive signals to the actuation assemblies 17 associated with each frame 10, 11. In particular, the drive signals are alternate periodic signals (for example, sinusoidal waves, square waves or other shaped waves), equal and in phase opposition, applied to equivalent elements (for example through comb structures) so as to generate, in each instant, a net harmonic force and to cause drive movements both directed parallel to the second horizontal axis Y, but in the opposite direction. In practice, the frames 10, 11 move with linear motion in the opposite manner, moving away from and towards each other at each half-period of the drive signals, as indicated by arrows 30, 31, directed in the opposite direction.

Thereby, the Coriolis masses 18, 19 are pulled by the frames 10, 11 through the second springs 20, but the sense mass 4 is stationary, being constrained to the support 13 through the sense elastic anchoring system 25 and decoupled from the Coriolis masses 18, 19 (in drive mode) through the third springs 26, which deform.

As shown in Figure 3, in presence of an angular speed $\Omega$ around the vertical axis Z, due to the Coriolis effect, an acceleration parallel to the first horizontal axis X acts on the gyroscope 1. Since the Coriolis masses 18, 19 are actuated in opposite directions, they are subject to accelerations (forces) directed in opposite directions and move correspondingly in phase opposition, as represented in Figure 3 by arrows 32.

Due to the coupling of the Coriolis masses 18, 19 to the sense mass 4 through the third springs 26 (rigid in the sense direction, here parallel to the first horizontal axis X) and due to the sense elastic anchoring system 25 (which allows only the rotation of the sense mass 4), the sense mass 4 rotates around the first barycentric axis B1 (in Figure 3, counterclockwise, sense movement).

The rotation of the sense mass 4 may be sensed through the angular position sense structure as a distance variation with respect to fixed electrodes (sense structure 22), in a per se known manner. However, other solutions (sensing as a modification of the facing area) are also possible.

The gyroscope 1 may therefore reliably sense yaw movements (rotations with respect to the vertical axis Z) and, virtually, is not sensitive to linear vibrations.

In fact, vibrations along the first horizontal axis X, which might cause movements of the Coriolis masses 18, 19 along this axis X, cannot be conveyed/transferred to the sense mass 4, since both Coriolis masses 18, 19 would be accelerated in the same direction.

As to vibrations along the second horizontal axis Y (which might cause movements of both Coriolis masses 18, 19 along this axis, as shown in Figure 4 and represented by unidirectional arrows 34), they virtually cause no rotation of the sense mass 4 and therefore are not detectable in case of ideal structure. However, in case of small dimensional inaccuracies and asymmetries due to manufacturing tolerances, for example in presence of a quadrature effect, well known to the person skilled in the art, undesired rotations of the sense mass 4 might occur, interpretable as due to the Coriolis force even in the absence of angular speed $\Omega$ along the vertical axis Z.

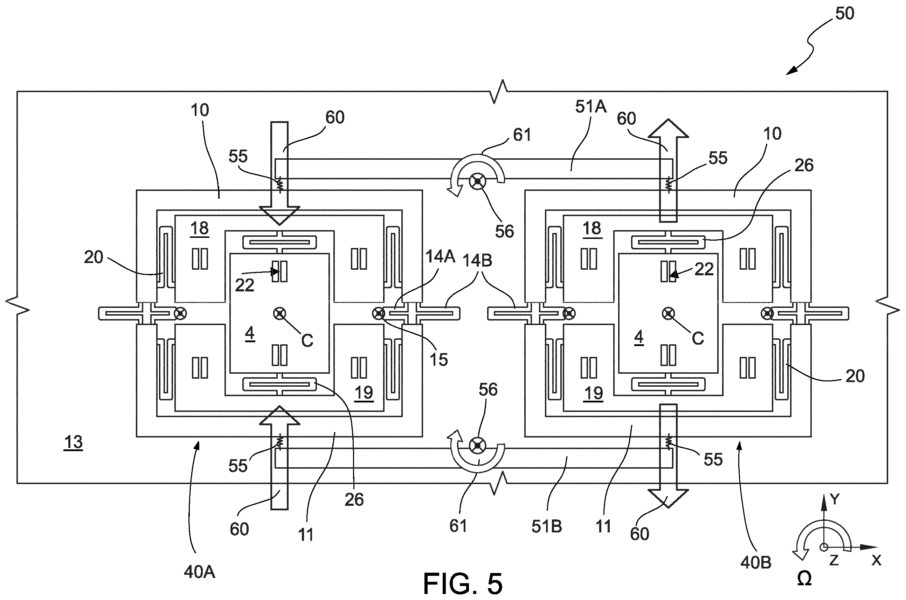

To improve the stability of the gyroscope 1, a gyroscope has been developed that is also resistant to secondary influences, with doubled structure, as shown in Figure 5.

Figure 5 shows a gyroscope 50 that does not belong to the invention, comprising two gyroscope units, equal to the gyroscope units 40 of Figure 1 and therefore identified by the same reference number (but referred to, where useful for understanding, as first gyroscope unit 40A and second gyroscope unit 40B).

The gyroscope units 40A, 40B are mutually coupled through two bridge elements (top bridge element 51A, bottom bridge element 51B).

In detail, in Figure 5, the top bridge element 51A is coupled to the first frame 10 of each gyroscope unit 40, and the bottom bridge element 51B is coupled to the second frame 11 of each gyroscope unit 40. In particular, the bridge elements 51A, 51B are connected at approximately central points of the respective frames 10, 11. In Figure 5, the bridge elements 51A, 51B are connected with the respective frames 10, 11 at their respective ends.

The bridge elements 51A, 51B are coupled to the frames 10, 11 through fourth springs 55, shown only schematically, substantially rigid in the direction of the second horizontal axis Y and allowing small relative rotations, so that the bridge elements 51A, 51B follow the movement of the frames 10, 11, as explained below.

Furthermore, the bridge elements 51A, 51B are anchored to the support 13 through bridge anchors 56 which are arranged centrally with respect to the same bridge elements 51A, 51B and which allow the rotation thereof around respective axes passing through the bridge anchors 56 and parallel to the vertical axis Z.

In the gyroscope 50 of Figure 5, the gyroscope units 40 are driven in phase opposition, that is when the frames 10, 11 of the first gyroscope unit 40A move towards the second barycentric axis B2, the frames 10, 11 of the second gyroscope unit 40B move away from the second barycentric axis B2 (as represented by arrows 60 in Figure 5), and vice versa.

Consequently, the portions of the bridge elements 51A, 51B coupled to the frames 10, 11 (here, the ends of the bridge elements 51A, 51B) move upwards or downwards in Figure 5 (in a direction, as a first approximation, parallel to the second horizontal axis Y) in an alternate manner, that is the movement in one direction (for example downwards) of the first frame 10 of a gyroscope structure 40 (for example the first gyroscope structure 40A) and the upward movement of the first frame 10 of the other gyroscope structure 40 (in the example, the second gyroscope structure 40B) causes the rotation of the top bridge element 51A in a first direction (in the example, counterclockwise) around its own bridge anchor 56; and vice versa for the second frames 11 and the bottom bridge element 51B, as shown by arrows 61.

Any angular speed $\Omega$ acting on the gyroscope 50 therefore causes displacements in opposite directions of the Coriolis masses 18 of the gyroscope units 40A, 40B, and of the Coriolis masses 19 of the gyroscope units 40A, 40B, as well as rotations in opposite directions of the sense masses 4 of the first and the second gyroscope units 40A, 40B. The angular position sense structures 22 of the first and the second gyroscope units 40A, 40B thus provide equal and opposite signals.

In this structure, any vibrations parallel to the second vertical axis Y cannot cause any movement of the frames 10, 11, since any accelerations acting thereon are prevented by the bridge elements 51A, 51B, which cannot translate due to the bridge anchors 56. In any case, as explained above with reference to Figure 4, any residual vibrations may be canceled.

A possible implementation of the gyroscope 50 for sensing yaw movements is shown in Figure 6, wherein the gyroscope units 40, as well as the actuation assemblies 17, the quadrature compensation structures 21 and the sense structures 22 are visible.

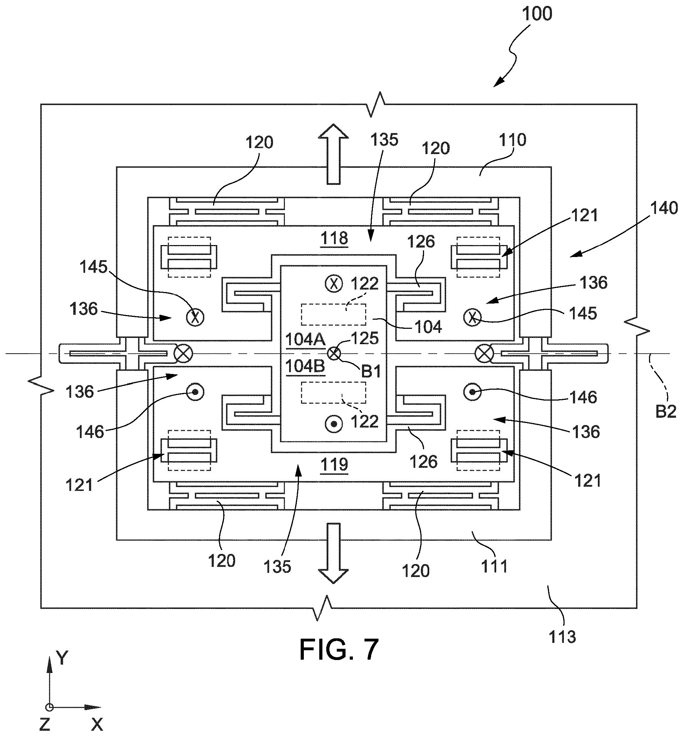

Figure 7 shows a gyroscope 100 that does not belong to the invention, for sensing pitch/roll movements (i.e. rotations of the gyroscope 100 around one of the horizontal axes X, Y of the inertial system XYZ). In particular, the following description refers to the pitch movement; the roll sensing may be sensed by rotating the whole structure by 90° (or through a structure modified by a person skilled in the art).

The gyroscope 100 of Figure 7 has a base structure similar to the gyroscope 1 of Figure 1 and operates according to a similar principle, even if based on different movements of the Coriolis masses; consequently, elements similar to those of the gyroscope 1 are indicated with reference numbers increased by 100 and will be described only as far as useful.

Specifically, in the gyroscope 100 of Figure 7, to allow sensing of pitch/roll movements, the Coriolis masses (here indicated by 118, 119) and the sense mass (here indicated by 104) have a degree of freedom along the vertical axis Z.

Here, in particular, in sense mode, the Coriolis masses 118, 119 may rotate in phase opposition around respective hinge axes parallel to the first horizontal axis X and pull, with respective portions, the sense mass (indicated by 104) away from these hinge axes.

Furthermore, the sense mass 104 may rotate around the second barycentric axis B2 (barycentric axis of the gyroscope 1, here forming also a barycentric axis of the sense mass 104 and of the elementary structure, here indicated by 140), parallel to the first horizontal axis X and passing through the first barycentric axis B1 of the sense mass 104.

In detail, in Figure 7, the frames 110, 111 are driven so as to move parallel to the second horizontal axis Y with alternate and phase-opposition motion, as described above with reference to Figure 2, and are coupled to the Coriolis masses 118, 119 so that, in drive mode, they also move parallel to the second horizontal axis Y and in phase opposition.

Furthermore, the Coriolis masses 118, 119 are coupled to the frames 110, 111 so that, in sense mode, in presence of any pitch movements of the gyroscope 100 (i.e. rotations around the second barycentric axis B2), they may also rotate around the hinge axes, as described above, and cause the rotation of the sense mass 104. In fact, with the indicated driving, pitch movements give rise to a Coriolis force parallel to the vertical axis Z in opposite directions on the two sides of the second barycentric axis B2; the sense mass 104, rotating, has a displacement component parallel to the vertical axis Z which may be sensed by electrodes arranged on the fixed structure (support 113), for example placed below or laterally to the sense mass 104.

In particular, in the gyroscope 100 of Figure 7, the sense mass 104 has an elongated shape in a direction parallel to the second horizontal axis Y, with sense portions 104A, 104B arranged on opposite sides of the second barycentric axis B2 and rotating, with respect to a horizontal plane XY, in opposite directions, as explained below. However, while the elongated shape of the sense masses 104 is advantageous, as it allows an optimization of the area, it is not essential.

In Figure 7, each Coriolis mass 118, 119 still is approximately C-shaped, with a base side 135 and protruding arms 136.

The base side 135 of each Coriolis mass 118, 119 is coupled to the respective frame 110, 111 through the second springs (indicated here by 120) and therefore forms a hinge portion hinged to the respective frame 110, 111; the protruding arms 136 extend towards the second barycentric axis B2.

The second springs 120 are here configured to allow the aforementioned rotation of the Coriolis masses 118, 119 around axes parallel to the first horizontal axis X in the sense mode. The second springs 120 are therefore rigid in the drive direction (parallel to the second horizontal axis Y) but compliant in sense direction (parallel to the vertical axis Z).

Due the opposite drive movement (conveyed by the frames 110, 111 to the respective Coriolis masses 118, 119), the Coriolis force determines opposite rotations of the Coriolis masses 118, 119. Consequently, when for example the first Coriolis mass 118 rotates to cause the free ends of its own protruding arms 136 to move towards the support 113 (moving away from an observer, cross symbol 145 in Figure 7), the second mass 119 rotates in the opposite direction, and the free ends of its own protruding arms 136 move away from the support 113 (moving towards the observer, dot symbol 146), and vice versa.

Furthermore, the third springs (here indicated by 126), which couple the Coriolis masses 118, 119 (and more precisely the protruding arms 136) to the sense mass 104, are configured to allow the rotation of the sense mass 104.

The sense mass 104 then follows, with its own sense portions 104A, 104B, the movement parallel to the vertical axis Z of the protruding arms 136 with respect to the plane XY, and rotates around the second barycentric axis B2.

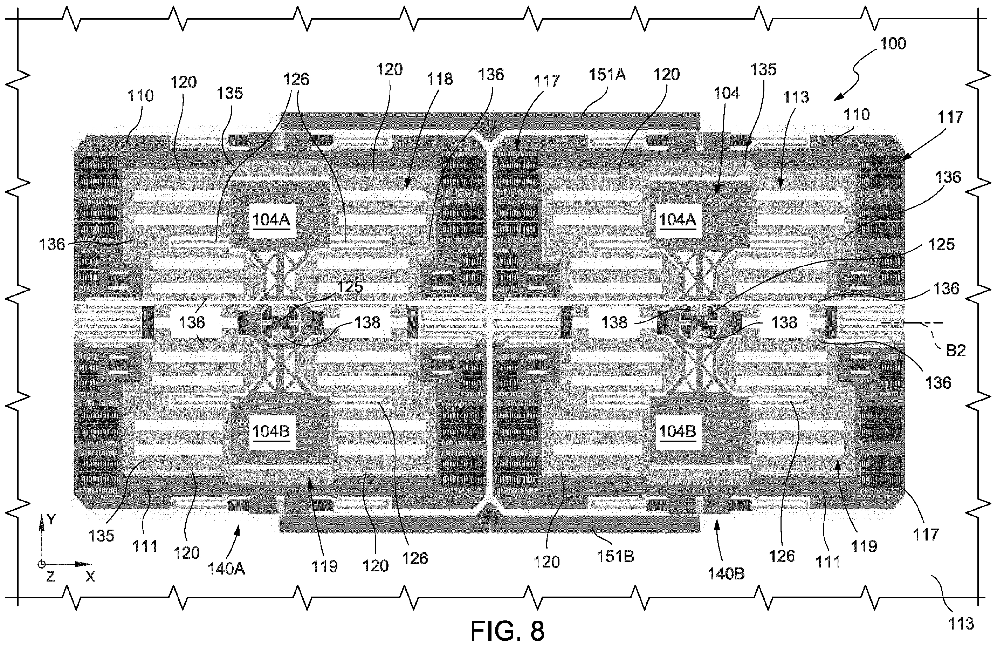

To allow the rotation of the sense mass 104, it is coupled to the support 113 through a sense elastic anchoring system, schematically indicated by 125 (see Figure 8).

As mentioned above, the rotation of the sense portions 104A, 104B may be sensed by sense structures 122 (for example electrodes 122, shown only schematically, dashed) integral with the support 113 and capacitively coupled to the sense portions 104A, 104B to sense capacitive differences due to the distance variations between the same sense portions 104A, 104B and the support 113.

Figure 7 also shows quadrature compensation structures 121.

A possible implementation of the gyroscope 100 for sensing yaw movements, doubling the structure to make it more resistant to linear vibrations in the direction of the second horizontal axis Y (similarly to what described with reference to Figure 5), is shown in Figure 8, wherein actuation assemblies 117 are also indicated.

Here, the frames 110, 111 are driven so as to move (parallel to the second horizontal axis Y) with phase opposition motion in each gyroscope unit (here indicated by 140A, 140B), similarly to what described above with reference to Figure 5.

In particular, in the gyroscope 100, the sense portions 104A, 104B (arranged on opposite sides of the second barycentric axis B2) move, with respect to the vertical axis Z, in opposite directions, in the two gyroscope units 140A, 140B, as explained below.

In fact, here, the Coriolis force directed parallel to the vertical axis Z determines opposite rotations of the Coriolis masses 118, 119 in the two gyroscope units 140A, 140B. Consequently, when for example the first Coriolis mass 118 of the first gyroscope unit 140A and the second Coriolis mass 119 of the second gyroscope unit 140B rotate to cause the free ends of their own protruding arms 136 to move towards the support 113, the second Coriolis mass 119 of the first gyroscope unit 140A and the first Coriolis mass 118 of the second gyroscope unit 140B rotate in the opposite direction, so that the free ends of their own protruding arms 136 move away from the support 113, and vice versa.

Consequently, the two sense masses 104 rotate in opposite directions around the second barycentric axis B2; that is, when the first sense portion 104A of one of the gyroscope units 140 (for example of the first gyroscope unit 140A) moves upwards (towards the observer, away from the support 113), the first sense portion 104A of the other gyroscope unit 140 (in the example, of the second gyroscope unit 140B) moves downwards (away from the observer, towards the support 113), and vice versa.

Figure 8 shows the sense elastic anchoring systems 125, which allow the rotation of the sense masses 104 around the second barycentric axis B2.

The gyroscope 100 of Figure 8 also has a high resistance to vibrations parallel to the second horizontal axis Y (as well as parallel to the first horizontal axis X), for reasons similar to what described with reference to Figure 5.

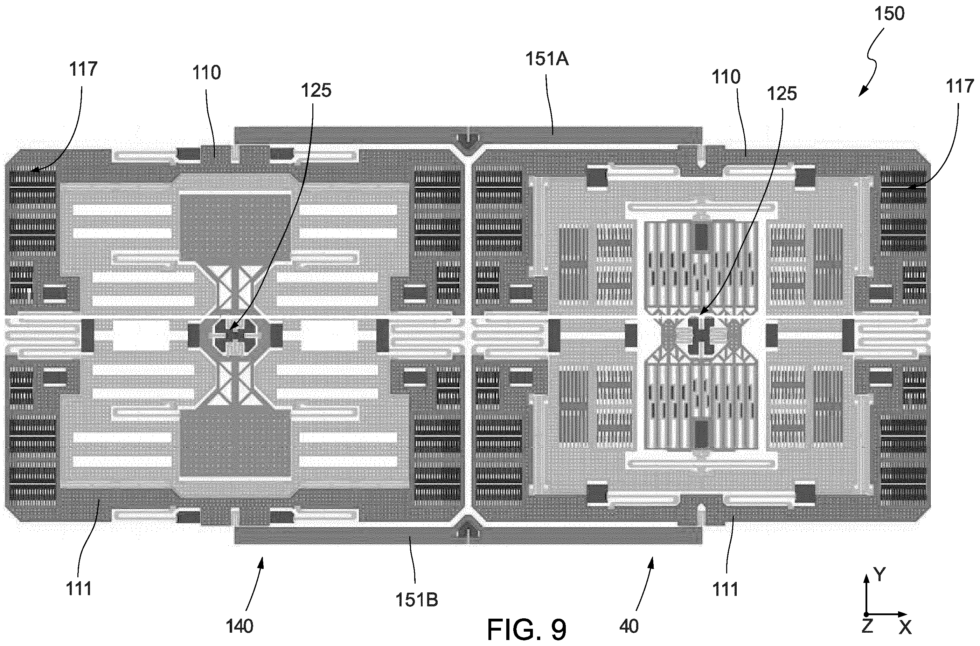

Figure 9 shows a gyroscope 150 which couples the structures 40 and 140 of Figures 6 and 8 so as to allow both an in-plane sensing (yaw movement) and an out-of-plane sensing (pitch/roll movement).

The gyroscope 150 is particularly advantageous since the presence of a single drive chain for both sense directions (actuation assemblies 117, frames 110, 111, bridge elements 151A, 151B) simplifies the associated control circuits (usually incorporated in separate devices, such as ASICs - Application Specific Integrated Circuits).

The gyroscope 150 also allows the linear vibrations (accelerations) to be rejected, while maintaining good performances and reduced dimensions (for example, 1.5 x 2.5 mm) .

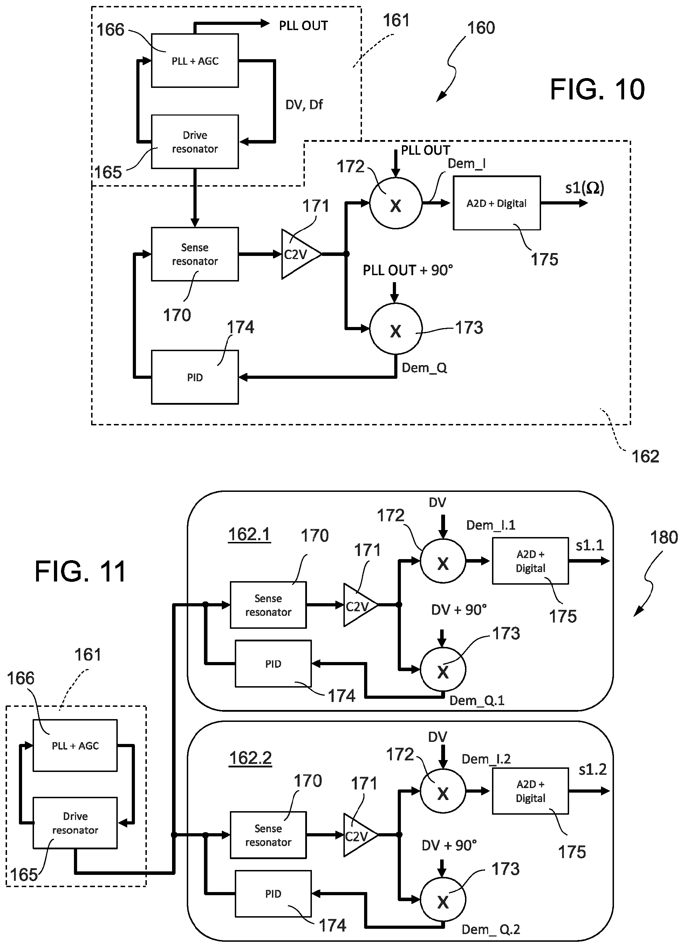

Figure 10 shows a circuit 160 for sensing angular speeds, usable in association with a MEMS gyroscope, for example applicable to the gyroscopes 1, 50, 100, 150 of Figures 1-9.

In particular, the circuit 160 has the function of processing the signals provided by a gyroscope to obtain angular speed data to be provided to a user (not shown).

The circuit 160 also has the function of regulating the correct operation of the same gyroscope, in particular with reference to the drive amplitude and frequency and to the quadrature compensation (by generating quadrature compensation voltages).

The circuit 160 comprises a drive stage 161 and a sense stage 162.

In particular, the drive stage 161 is here exemplified by a resonant drive block 165 and by a regulation block (PLL+AGC) 166.

The resonant drive block 165 comprises both the mechanical drive structures (the frames 10, 11, 110, 111 and relative drive structures/electrodes) and the relative circuitry for generating the drive voltages and the movement detection circuitry.

The regulation block 166 comprises circuitry intended for controlling the drive parameters, including circuits for regulating the drive voltages and controlling the gain, and is feedback connected with the resonant drive block 165 so as to closed-loop regulate the amplitude and the frequency of the drive signals of the resonant drive block 165. The regulation block 166 therefore generates an output signal PLL OUT.

The drive stage 161 operates in any known manner, for example as described in the document "A 104-dB Dynamic Range Transimpedance-Based CMOS ASIC for Tuning Fork Microgyroscopes" by Ajit Sharma et al., IEEE Journal of Solid-State Circuits, Vol 42. No. 8, August 2007 (see, in particular, Figure 2 and the relative description in Part II B, "Drive Oscillator").

The sense stage 162 is exemplified here by a resonant sense block 170; a C/V amplifier 171; a first demodulator 172, a second demodulator 173; a PID block 174 and an A/D conversion block 175.

The resonant sense block 170 comprises both the mechanical sense structures (the Coriolis masses 18, 19, 118, 119; the sense masses 4, 104, as well as the sense structures/electrodes) and the quadrature compensation structures (21, 121) and the movement detection circuitry.

The capacitance to voltage conversion amplifier 171 schematized here comprises signal amplifiers connected to the sense structures/electrodes.

The first and the second demodulators 172, 173 demodulate the output signal of the C/V amplifier 171 respectively with the drive signal PLL OUT generated by the regulation block 166 and with a signal phase shifted by 90° (PLL OUT + 90°), in order to separate the signal component due to the Coriolis force (Coriolis signal Dem_I, proportional to the angular speed of the sense masses 4, 104) from the quadrature component Dem_Q (proportional to the position of the sense masses 4, 104), as explained in the aforementioned article in Part II B, "Sense Chanel".

The PID block 174 closed-loop controls, in a per se known manner, the compensation voltage applied to the quadrature compensation structures 21 based on the quadrature signal Dem_Q generated by the second demodulator 173.

The A/D conversion block 175, connected to the output of the first demodulator 172, converts the Coriolis signal Dem_I into digital form and outputs an angular speed signal s1, uniquely correlated to the angular speed $\Omega$.

The sense control stage 162 operates broadly as explained above in the aforementioned article in Part II B, "Sense Chanel" or in the article "Quadrature-Error Compensation and Corresponding Effects on the Performance of Fully Decoupled MEMS Gyroscopes", by Erdinc Tatar et al., IEEE Journal of Microelectromechanical Systems, Vol. 21. No. 3, June 2012 (see, in particular, Figure 4, including the quadrature compensation loop).

While the diagram of Figure 10 allows a reliable regulation of the operation of a gyroscope in most applications, in some applications more stringent checks are desired, to ensure high safety conditions. This is the case, for example, of a gyroscope used in the automotive field for controlling parameters of vehicle parts and for checking driving conditions, to satisfy the vehicle and/or people safety conditions required nowadays.

In these cases, it is often desired to have active confirmations that the controlled parameters, quantities and conditions match the design characteristics or expected values and signaling is generated, for example through flags or alarm signals, conversely.

Figure 11 shows an angular speed sense circuit 180 usable for the purpose of monitoring the offset and sensitivity stability of a MEMS gyroscope, for example of the gyroscopes 50, 100 of Figures 5, 6 and 8.

To this end, the angular speed sense circuit 180 comprises a drive control stage, similar to the drive control stage 161 of Figure 10 and therefore indicated with the same reference number, and two sense control stages, each similar to the sense control stage 162 of Figure 10 and therefore indicated as first and second sense control stages 162.1, 162.2.

In the angular speed sense circuit 180, each sense control stage 162.1, 162.2 is an independent processing channel and comprises one own resonant sense block 170; for example, the first sense control stage 162.1 may be associated with the sense mass 4, 104 of the first gyroscope unit 40A, 140A of Figure 5, 6 or 8 (as well as with the corresponding Coriolis masses 18, 19, 118, 119) and the second sense control stage 162.2 may be associated with the corresponding parts of the second gyroscope unit 40B, 140B of Figure 5, 6 or 8.

Similarly to Figure 10, each sense control stage 162.1, 162.2 comprises, in addition to the respective resonant sense block 170, a C/V amplifier 171; a first demodulator 172 (generating a demodulated rate signal Dem_I.1, resp. Dem_I.2), a second demodulator 173 (generating a demodulated quadrature signal Dem_Q.1, resp. Dem_Q.2); a PID block 174 and an A/D conversion block 175 (generating an angular speed signal s1.1, resp. s1.2, uniquely correlated to the angular speed $\Omega$, as sensed by its own processing channel).

Obtaining two angular speed signals s1,1, s1.2 from two virtually identical, but distinct, channels, allows the operation of the system to be monitored more widely and the safety conditions to be assessed.

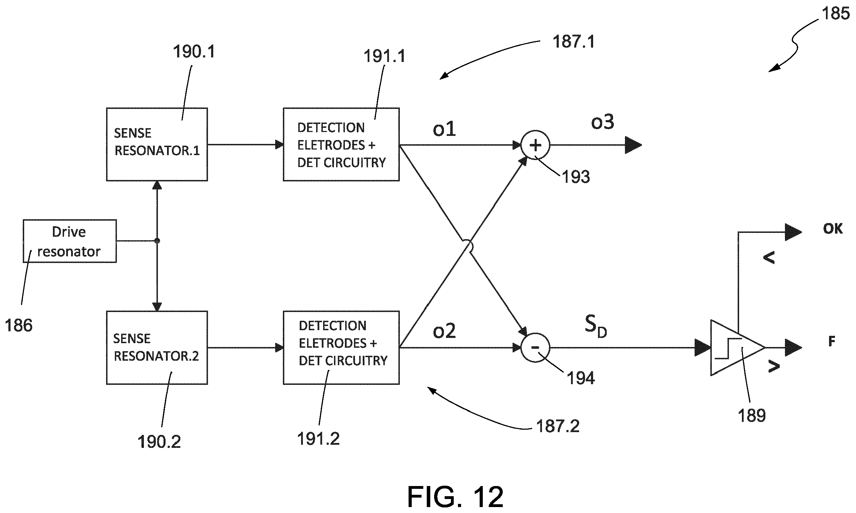

For example, the angular speed signals s1,1, s1.2 may be used as shown in the diagram of Figure 12, relating to a gyroscope system 185 configured to generate safety condition signaling.

In Figure 12, the gyroscope system 185 comprises a double sense-channel gyroscope, represented in a very schematic manner, and safety monitoring circuitry.

In detail, the gyroscope system 185 comprises a resonant drive block 186, a first sense channel 187.1, a second sense channel 187.2, and a threshold comparator 189.

The resonant drive block 186 may correspond to the resonant drive block 165 of Figures 10 and 11; in particular, it may be coupled to a regulation block PLL+AGC, similar to the regulation block 166 of Figures 10 and 11.

The first and the second sense channels 187.1, 187.2 are equal to each other and each comprise a respective movement resonator 190.1, 190.2 and a respective detection structure 191.1, 191.2.

The movement resonators 190.1, 190.2 of Figure 12 are equal to each other and may correspond to the resonant sense blocks 170 of Figure 11; in particular, they may be formed by the sense masses 4, 104 of the gyroscope units 40A, 40B; 140A, 140B of Figures 5, 6 and 8. The movement resonators 190.1, 190.2 may be coupled to respective quadrature compensation loops (for example to blocks 173, 174 of Figure 11 or to other quadrature control circuits).

The detection structures 191.1, 191.2 are equal to each other and comprise detection electrodes and processing circuits of the signals sensed through said electrodes; for example, they may correspond to blocks 171, 172 and 175 of the first and the second sense control stage 162.1, 162.2 of Figure 11 or to similar blocks.

The detection structures 191.1, 191.2 generate respective channel angular speed signals o1, o2 provided to a sum block 193, which sums them and generates an output angular speed signal o3 at output. The output angular speed signal o3 has a complete dynamics with respect to the mechanical/electronic structure and may be used by a processing system or apparatus to obtain parameters useful for operation, for example for controlling the driving conditions and/or instruments and devices mounted on motor vehicles.

If the sense channels 187.1, 187.2 were identical, the channel angular speed signals o1, o2 would be equal. Actually, since the two sense channels 187.1, 187.2 are distinct, normally, in correct operation condition, the channel angular speed signals o1, o2 differ a little, due to manufacturing tolerances, small dimensional or shape variations, or small differences in the processing circuits.

In certain circumstances, however, for example due to a different drift of the respective characteristics over time, the malfunction of one of the sense channels 187.1, 187.2, the fatigue or initial breakdown of one of the movement resonators 190.1, 190.2, the channel angular speed signals o1, o2 may differ in a significant, sensable manner.

The gyroscope system 185 therefore comprises a difference block 194, which subtracts the channel angular speed signals o1, o2 from each other so as to output a difference signal $S_D$, and a threshold comparator 189 which compares the difference signal $S_D$ with a set threshold. If the difference signal $S_D$ is lower than the set threshold, the threshold comparator 189 outputs a correct operation signal (ok in Figure 12); if the difference signal $S_D$ is lower than the set threshold, the threshold comparator 189 outputs an alarm signal (for example a flag F) for suitable processing circuits provided in the apparatus (not shown) or for a suitable control system (not shown).

If the detection structures 191.1, 191.2 comprise A/D converters as shown in Figure 11, they may further include respective high-pass filters; in this case the threshold comparator 189 may compare the difference between the digital angular speed signals with a suitable threshold.

For example, the channel angular speed signals o1, o2 may differ in a non-negligible manner due to the package and in particular due to the presence of soldering regions or due to the bending of the board having the die integrating the gyroscope mounted thereon ("PCB bending" phenomena), with asymmetrical effects on the semiconductor substrate, for example, on the support 13, 113 of Figures 1-9.

This may lead to gain variations of the sense channels 187.1, 187.2. In this case, filtering the channel angular speed signals o1, o2 with a low-pass filter may also be useful.

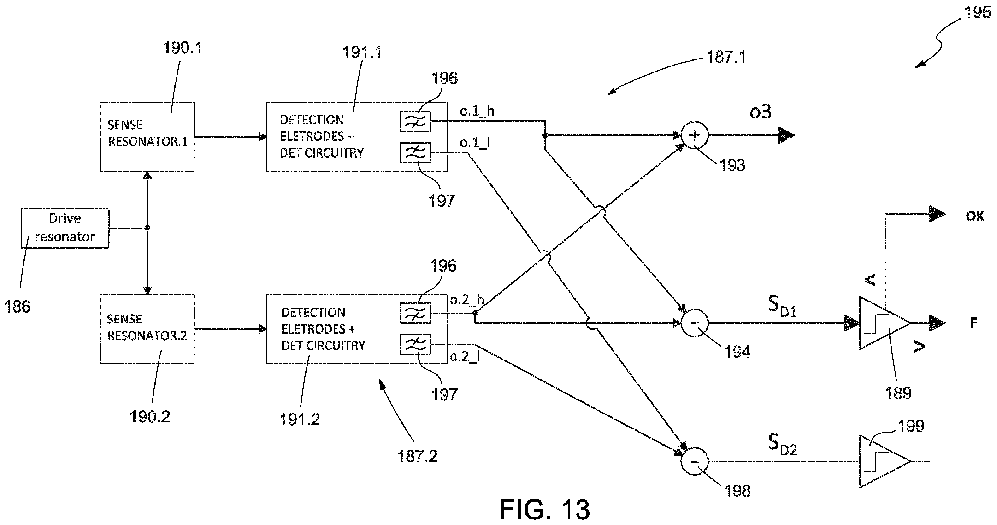

For example, Figure 13 shows a gyroscope system 195 comprising a first and a second sense channel 187.1, 187.2 similar to the homonymous channels of Figure 12, wherein the detection structures 191.1, 191.2 comprise, each, both a high-pass filter 196 (generating respective first digital angular speed signals o1_h, o2_h), and a low-pass filter 197 (generating respective second digital angular speed signals o1_l, o2_l).

The first digital angular speed signals o1_h, o2_h are provided both to the sum block 193 and to a first difference block 194 (similar to the difference block 194 of Figure 12 and therefore indicated with the same reference number) for generating the output angular speed signal o3 and the difference signal, here indicated as first difference signal $S_{D1}$, similarly to what described above for Figure 12.

The first difference signal $S_{D1}$ is provided to a first threshold comparator 189, similar to the threshold comparator 189 of Figure 12 and therefore indicated with the same reference number.

Furthermore, the second digital angular speed signals o1_l, o2_l are provided to a second difference block 198 which generates a second difference signal $S_{D2}$, provided to a second threshold comparator 199.

In this manner, drift phenomena may be highlighted.

In fact, by naming G.1 and, respectively, G.2 the gain of the sense channels 187.1, 187.2 and, respectively, ZRL.1, ZRL.2 their offsets (null input condition output, i.e. with gyroscope stationary), it is:

$$o1 = G.1\Omega + ZRL.1$$

$$o2 = G.2\Omega + ZRL.2$$

The output angular speed signal o3 is therefore given by:

$$o3 = \frac{G.1\Omega + G.2\Omega}{2} = \frac{G.1 + G.2}{2}\Omega + \frac{ZRL.1 + ZRL.2}{2}$$

Conversely, the first difference signal $S_{D1}$, after the high-pass filtering, is equal to

$$S_{D1} = (G.1-G.2)\ \Omega$$

which may be directly compared with a first threshold Th1.

Conversely, the second difference signal $S_{D2}$, after the low-pass filtering, is equal to

$$S_{D2} = (G.1 - G.2) + (ZRL.1-ZRL.2)$$

which, together with the information given by the first difference signal $S_{D1}$, provides information on a possible offset differential drift (ZRL.1-ZRL.2).

The presence of two distinct, but equal, channels allows a lot of information on the operation of the gyroscope to be acquired.

For example, in case of wide displacements of a mass, such as the sense mass 4, 104 of Figures 5, 6 or 8, harmonic distortions may be generated. As is known, the response of a system to such distortions resides in the generation of odd harmonics which may cause, if frequency tuned with spurious sense modes, offset changes and gain in the gyroscope.

Furthermore, spurious mode frequency adaptations may also be triggered by stress due to packaging or assembling process by customers.

The presence of two sense channels 187.1, 187.2 allows these problems to be highlighted and compensation measures to be introduced or in any case the defective components to be replaced, increasing the safety of the systems using them.

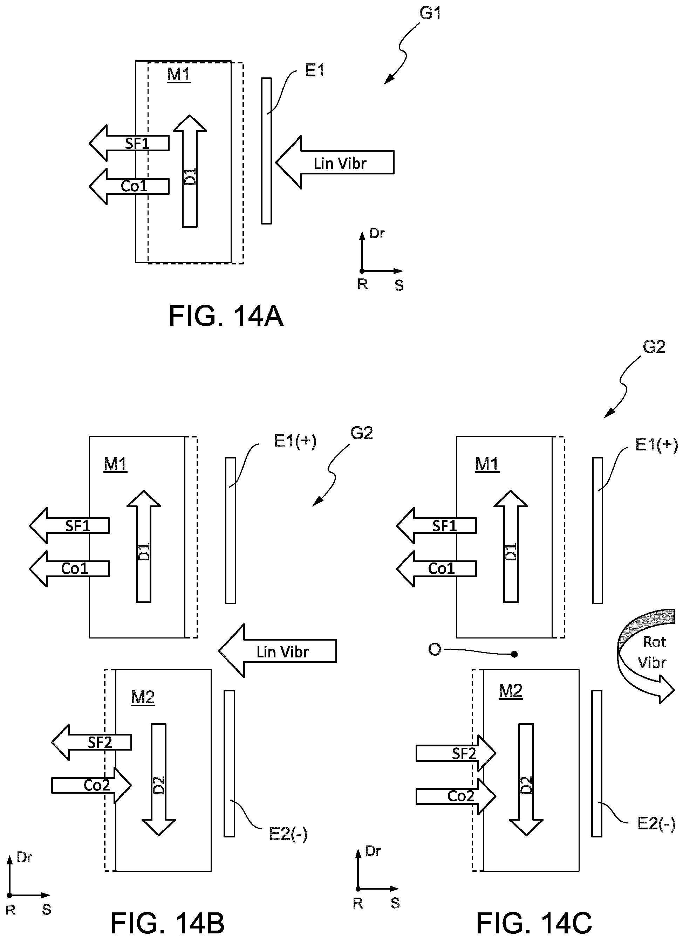

Figures 14A-14G show in an extremely simplified manner different base structures of gyroscopes and their behavior in presence of Coriolis forces and vibrations both of linear type (spurious movements of the gyroscope parallel to the main extension direction) and of rotational type (spurious movements of the gyroscope around one of the inertial axes).

In particular, in Figures 14A-14G, the gyroscopes comprise one or more movable masses (M1-M4) which are driven with alternate rectilinear motion at a drive frequency fd along a drive axis Dr (as described below and represented by arrows D1-D4) and which rotate around a rotation axis R due to an external rotational field (angular speed $\Omega$).

In particular, in Figures 14A-14E, the movable masses M1-M4 are constrained to a bearing structure (not shown) so as to be able to translate, in presence of Coriolis forces (indicated by arrows Co1-Co4), along a sense direction S perpendicular to the drive direction Dr and to the rotation axis R (translational Coriolis motion).

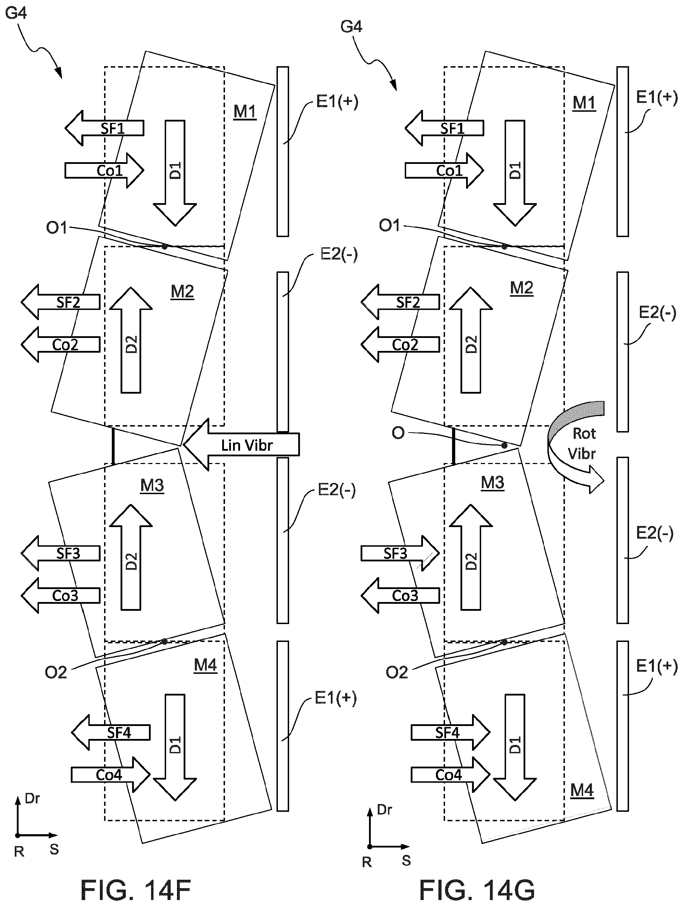

In Figures 14F-14G, the movable masses M1-M4 are constrained to a bearing structure (not shown) so as to be able to rotate around axes parallel to the rotation axis R in presence of Coriolis forces (indicated by arrows Co1-Co4, rotational Coriolis motion).

In all Figures, dashed lines indicate the rest positions of the movable masses M1-M4 and solid lines indicate possible end-of-displacement positions, due to the Coriolis forces.

For example, in Figures 14A-14E, the drive Dr and sense S axes may be the horizontal axes X, Y of the gyroscope; in Figures 14F-14G, the drive Dr and sense S axes may be the second horizontal axis Y and the vertical axis Z of the gyroscope.

Furthermore, Figures 14A-14G show the forces (accelerations) acting on the movable masses M1-M4 in presence of linear vibrations, acting along the sense direction S (arrows Lin Vibr) and in presence of rotational vibrations, acting around the rotation axis R (arrows Rot Vibr).

Figures 14A-14G also show, through arrows, spurious forces SF, SF1-SF4 due to spurious vibrations of the respective gyroscope G1-G3, which may act on the movable masses M1-M4 in the same directions as the Coriolis forces. It is therefore desirable to reject the spurious forces SF, SF1-SF4 to be able to correctly calculate the angular speed that gives rise to the displacements of the masses M1-M4.

In these Figures, sense structures E1-E4 are also shown, for example electrodes capacitively coupled to the movable masses M1-M4 to sense the movements thereof, for example as distance variations.

In particular, Figure 14A shows a gyroscope G1 having a movable mass M1, driven with alternate rectilinear motion along the drive axis Dr (drive movement D1).

The Coriolis force acting on the movable mass M1 in the sense direction S is indicated by arrow Co1. Any spurious vibration parallel to the sense axis (arrow SF1) may act on the movable mass M1 in the same direction as the Coriolis force Co1 and may cause a spurious movement not distinguishable from the sense movement.

Therefore, the gyroscope G1 is not resistant to linear vibrations.

Figure 14B shows a gyroscope G2 having two movable masses (first and second movable masses M1, M2), equal to each other (same shape, same inertial mass $m$, same support structures, not shown), driven in phase opposition along the drive axis Dr, as represented by arrows D1, D2.

A first sense structure E1 is coupled to the first movable mass M1 and a second sense structure E2 is coupled to the second movable mass M2.

Due to the opposite driving, the Coriolis forces acting on the movable masses M1, M2 are directed in opposite directions (arrows Co1, Co2). Conversely, a spurious vibration directed parallel to the sense axis S (arrow Lin Vibr) gives rise to spurious forces SF1, SF2 (respectively on the first movable mass M1 and on the second movable mass M2) both directed in the same direction. Consequently, in each drive period, in one of the two movable masses M1, M2, the spurious force is directed in the same direction as the Coriolis force (in Figure 14B, on the first movable mass M1) and, in the other movable mass M2, M1, the spurious force is directed in the opposite direction with respect to the Coriolis force (in the situation shown in Figure 14B, on the second movable mass M2).

In practice, in Figure 14B the movement due to the spurious vibration Lin Vibr acts in the same direction as the (Coriolis) sense movement only on one movable mass and in the opposite direction on the other movable mass. The spurious vibration Lin Vibr may thus be sensed and canceled, for example by subtracting the sense signals measured on the movable masses M1, M2**.**

Therefore, the gyroscope G2 is resistant to linear vibrations.

Figure 14C shows the behavior of the same gyroscope G2 in presence of rotational vibrations.

Also here, the Coriolis forces acting on the movable masses M1, M2 are directed in opposite directions (arrows Co1, Co2). However, even a spurious rotational vibration causing a rotation of the gyroscope G2 around a barycentric axis O (arrow Rot Vibr) gives rise to spurious forces SF1, SF2 directed in opposite directions along the sense axis S. Consequently, the spurious forces SF1, SF2 are directed in the same direction as the Coriolis force Co1, Co2 in both movable masses M1, M2 and cause a movement in the same direction as the sense movement. Since the movement due to the rotational vibration is concordant with the sense movement in both movable masses M1, M2, it cannot be distinguished from the movement due to the Coriolis force.

The same also applies to the drive half-period wherein the spurious forces SF1, SF2 are directed in the opposite direction with respect to the Coriolis forces Co1, Co2; however, they would not be distinguishable.

Therefore, the gyroscope G2 is not resistant to rotational vibrations.

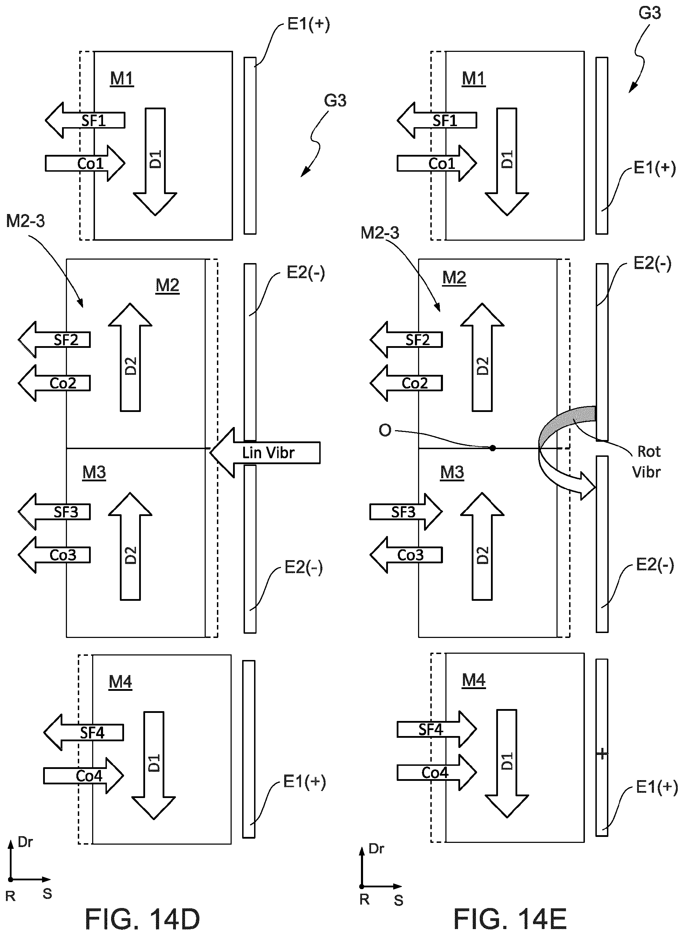

Figure 14D shows a gyroscope G3 comprising four movable masses M1, M2, M3, M4, equal to each other (same shape, same inertial mass $m$, same support structures, not shown) and arranged side by side along a direction, here the drive axis Dr, wherein the movable masses M1-M4 may translate parallel to the sense axis S perpendicular to the drive axis Dr, when the gyroscope G3 rotates around the rotation axis R.

In the gyroscope G3, the two furthest movable masses (first and fourth movable masses M1, M4, hereinafter also referred to as external movable masses) are driven with the same phase (arrow D1) and the two adjacent movable masses (second and third movable masses M2, M3, hereinafter also referred to as central movable masses) are driven with the same phase, but in phase opposition to the two external movable masses M1, M4 (arrows D2 opposite to arrows D1).

Since the second and third movable masses M2, M3 are driven with the same phase, they may be joined and form a single central movable mass M2-3.

Sense structures E1-E4 are each coupled to a respective movable mass M1-M4.

Due to the opposite driving, the Coriolis forces acting on the external movable masses M1 and M4 (arrows Co1, Co4) are directed in the opposite direction with respect to the Coriolis forces acting on the central movable masses M2 and M3 (arrows Co2, Co3). Conversely, a spurious vibration directed parallel to the sense axis S (arrow Lin Vibr) gives rise to spurious forces SF1-SF4 all having the same direction. Consequently, in two movable masses (in Figure 14D, in the external movable masses M1, M4), the spurious force (SF1, SF4) is directed in the opposite direction to the Coriolis force Co1, Co4 and, in other two movable masses (in Figure 14D, in the central movable masses M2, M3), the spurious force (SF2, SF3) is directed in a concordant direction with the Coriolis force.

In practice, in each drive half-period, the spurious vibration is concordant with the sense movement in two movable masses and is discordant in the other two movable masses. The spurious vibration Lin Vibr may thus be sensed and canceled.

Therefore, the gyroscope G3 is resistant to linear vibrations.

Figure 14E shows the same gyroscope G3 as Figure 14D in presence of rotational vibrations Rot Vibr.

Also here, the Coriolis forces acting on the external movable masses M1, M4 (arrows Co1, Co4) are directed in mutually concordant directions, opposite with respect to the Coriolis forces acting on the central movable masses M2, M3 (arrows Co2, Co3). Here the spurious rotational vibration (arrow Rot Vibr) gives rise to spurious forces SF1-SF4 which tend to cause the gyroscope G3 to rotate around its own barycenter O and therefore have opposite directions on the two sides of the barycenter O. In practice, the spurious forces SF1, SF2 acting on the first and the second movable masses M1, M2 are opposite to the spurious forces SF3, SF4 acting on the third and the fourth movable masses M3, M4.

Consequently, the movable masses M1-M4 have Coriolis forces and spurious forces acting differently in the different movable masses M1-M4. For example, in Figure 14E, the forces (Co1, SF1; Co3, SF3) acting on the first and the third movable masses M1, M3 have opposite direction; the forces (Co2, SF2; Co4, SF4) acting on the second and the fourth movable masses M2, M4 have concordant direction.

Due to the different behavior of the movable masses M1-M4, the movement caused by the Coriolis force may be distinguished from the movement caused by the rotational vibration Rot Vibr.

Consequently, the gyroscope G3 is also resistant to rotational vibrations.

Figure 14F shows a gyroscope G4 comprising four movable masses M1, M2, M3, M4, equal to each other (same shape, same inertial mass $m$, same support structures, not shown) arranged side by side along one direction, here the drive axis Dr.

Here, the movable masses M1-M4 are coupled two by two, that is they form mass pairs (first pair M1-M2, second pair M3-M4) which may rotate around rotation axes O1, O2 barycentral for each mass pair.

Furthermore, in the gyroscope G4, the two external movable masses (first and fourth movable masses M1, M4) are driven with the same phase (arrow D1) and the two central movable masses (second and third movable masses M2, M3) are driven with the same phase, but in phase opposition to the external movable masses M1, M4 (arrows D2 opposite to arrows D1) .

Similarly to what described for Figure 14D, due to the opposite driving, the Coriolis forces acting on the external movable masses M1 and M4 (arrows Co1, Co4) are concordant with each other and opposite with respect to the Coriolis forces acting on the central movable masses M2 and M3 (arrows Co2, Co3). Conversely, a spurious vibration directed parallel to the sense axis S (arrow Lin Vibr) gives rise to spurious forces SF1-SF4 all having the same direction. Consequently, in two movable masses (in Figure 14F, in the external movable masses M1, M4), the spurious force (SF1, SF4) is directed in the opposite direction to the Coriolis force Co1, Co4 and, in other two movable masses (in Figure 14D, in the central movable masses M2, M3), the spurious force (SF2, SF3) is directed in a direction concordant with that of the Coriolis force.

In practice, in each drive half-period, the spurious vibration is concordant with the sense movement in two movable masses and is discordant in the other two movable masses. The spurious vibration Lin Vibr may thus be sensed and canceled.

Therefore, the gyroscope G3 is resistant to linear vibrations.

Figure 14G shows the same gyroscope G4 as Figure 14F in the presence of rotational vibrations Rot Vibr.

Also here, the Coriolis forces acting on the external movable masses M1, M4 (arrows Co1, Co4) are directed in a mutually concordant direction that is opposite to the Coriolis forces acting on the central movable masses M2, M3 (arrows Co2, Co3). Here the spurious rotational vibration (arrow Rot Vibr) gives rise to spurious forces SF1-SF4 which tend to cause the gyroscope G3 to rotate around its own barycenter O and therefore have opposite directions on the two sides of the barycenter O. In practice, the spurious forces SF1, SF2 acting on the first and the second movable masses M1, M2 (first pair) are opposite to the spurious forces SF3, SF4 acting on the third and fourth movable masses M3, M4 (second pair).

Consequently, the movable masses M1-M4 have Coriolis forces and spurious forces acting differently on the different movable masses M1-M4. For example, in Figure 14G, on the first and the third movable masses M1, M3, the acting forces (Co1, SF1; Co3, SF3) have opposite direction; on the second and the fourth movable masses M2, M4, the acting forces (Co2, SF2; Co4, SF4) have concordant direction.

Due the different behavior of the movable masses M1-M4, the movement caused by the Coriolis force may be distinguished from the movement caused by the rotational vibration Rot Vibr.

Consequently, the gyroscope G4 is also resistant to rotational vibrations.

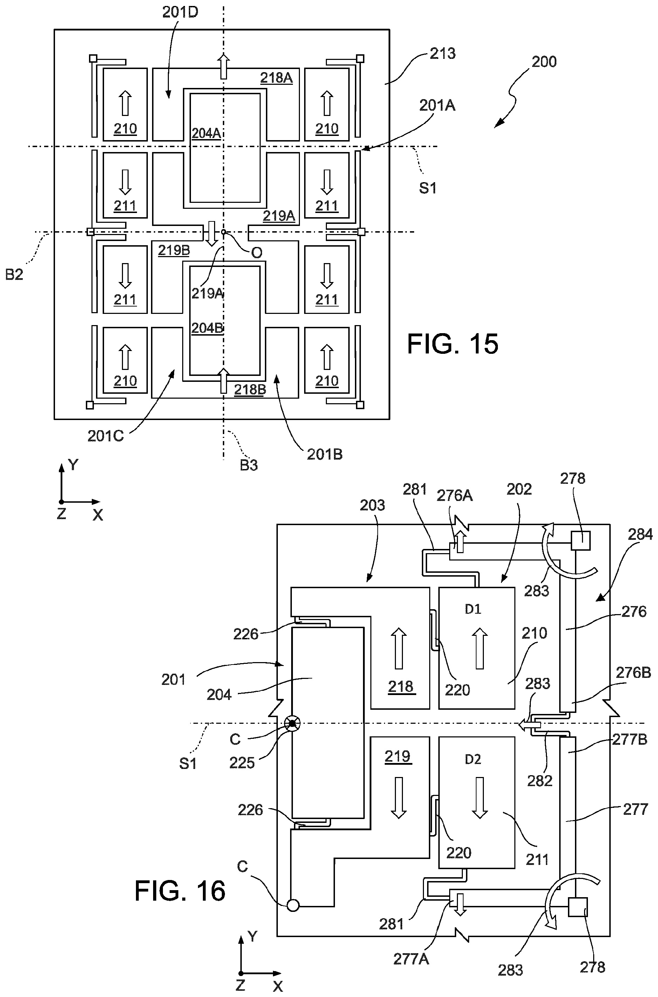

Figure 15 shows a gyroscope 200 that does not belong to the invention, operating according to the principle shown in Figures 14D, 14E.

The gyroscope 200 is of MEMS type, and has a substantially planar structure with greater dimensions directed parallel to a first horizontal axis X and to a second horizontal axis Y of an inertial reference system XYZ having a vertical axis Z.

The gyroscope 200 has a symmetrical structure with respect to a second and a third barycentric axis B2, B3 parallel to the first and, respectively, to the second horizontal axis X, Y, but is configured to be driven as described with reference to Figures 14D, 14E.

In detail, the gyroscope 200 comprises four elementary structures 201. Where necessary, the four elementary structures 201 are also referred to as first, second, third and fourth elementary structures 201A, 201B, 201C and 201D (clockwise in Figure 15, with the first elementary structure 201A at the top right of Figure 15).

With reference also to Figure 16, showing for example the first elementary structure 201A, each elementary structure 201 comprises a drive structure 202; a Coriolis structure 203 and a sense mass 204.

The drive structure 202 comprises two frames 210, 211 configured to generate drive forces directed in opposite directions, here parallel to the second horizontal axis Y.

In each drive structure 202, the two frames 210, 211 are arranged adjacent in a direction parallel to the second horizontal axis Y, the first frame 210 arranged farther and the second frame 211 arranged closer to the second barycentric axis B2 of the gyroscope 200.

The Coriolis structure 203 of each elementary structure 201 comprises two Coriolis masses 218, 219 arranged adjacent in a direction parallel to the second horizontal axis Y.

Hereinafter, the Coriolis mass 218 of each elementary structure 201 arranged farther from the second barycentric axis B2 of the gyroscope 200 is also referred to as first Coriolis mass 218 and the Coriolis mass 219 of each elementary structure 201 arranged closer to the second barycentric axis B2 of the gyroscope 200 is also referred to as second Coriolis mass 219.

The first Coriolis mass 218 is coupled to the first frame 210; the second Coriolis mass 219 is coupled to the second frame 211. The Coriolis masses 218, 219 are coupled to the respective frames 210, 211 through second springs 220.

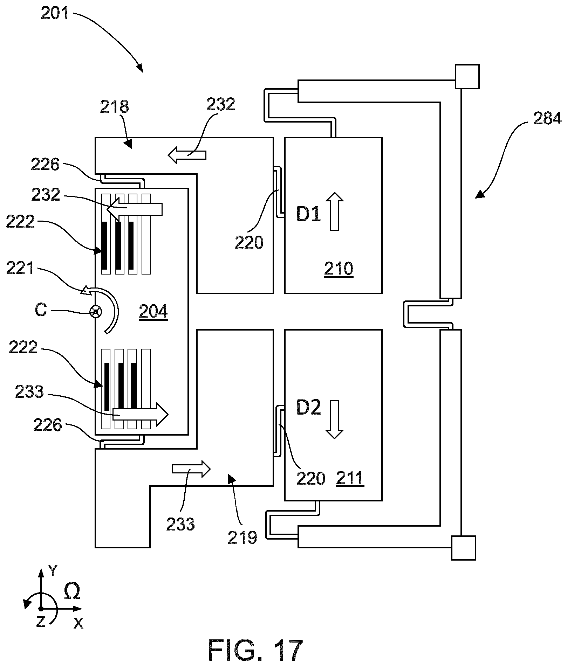

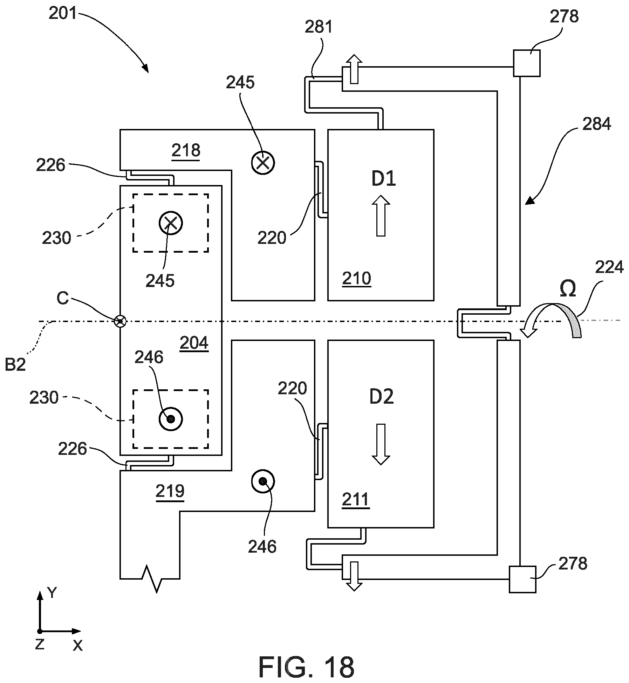

The second springs 220 are rigid in the drive direction (parallel to the second drive axis Y) so as to pull the respective Coriolis masses 218, 219 in movement in the drive mode. However, the second springs 220 are compliant in the sense direction, as discussed below with reference to Figures 17 and 18.

In Figure 15, the Coriolis masses 218, 219 of the elementary structures 201 are approximately L-shaped, and the Coriolis masses 218, 219 of two elementary structures 201 adjacent in a direction parallel to the first horizontal axis X (pairs of elementary structures 201A/201C and 201B/201C) are joined so as to have an overall C shape similar to that of the gyroscope 1 of Figures 1-4 (common Coriolis masses, indicated where useful by 218A, 218B, 219A, 219B).

In practice, in the gyroscope 200 of Figures 15, 16, each pair 201A/201C and 201B/201C of elementary structures has a substantially symmetrical structure with respect to a symmetry axis S1 parallel to the first horizontal axis X, which also represents a barycentric axis for each sense mass 204 and hereinafter is therefore also referred to as barycentric sense axis S1. The first Coriolis masses 218 and the first frames 210 are arranged on one side of symmetry axis S1; the second Coriolis masses 218 and the second frames 211 are arranged on an opposite side of symmetry axis S1. In practice, symmetry axis S1 here also forms a barycentric axis for each pair 201A/201C and 201B/201C of elementary structures.

The first Coriolis masses 218 of the pairs of elementary structures 201A/201C and 201B/201C therefore have the same drive movement (i.e. they all move in the same direction and with the same phase); similarly, the second Coriolis masses 219 of the pairs of elementary structures 201A/201C and 201B/201C all move in the same manner, that is in the same direction and with the same phase, but in phase opposition with respect to the first Coriolis masses 218.

Since the second Coriolis masses 219 (closer to the second barycentric axis B2 of the gyroscope 200) move in a concordant manner, they are monolithic herein.

If allowed by the geometry, also the second drive frames 211 (which generate, as mentioned, a concordant drive movement) might be joined to each other, that is the gyroscope 200 might have a second common drive frame 211 coupled to the second common Coriolis mass 219.

In this manner a high movement symmetry is obtained.

Furthermore, here, the sense mass 204 is shared between the two elementary structures of each pair 201A/201C, 201B/201C so that the gyroscope 200 of Figure 15 comprises only two sense masses, referred to (where useful for understanding) as first sense mass 204A, common to the first and the fourth elementary structures 2021A, 201D, and second sense mass 204B, common to the second and the third elementary structures 2021B, 201C.

In practice, each sense mass 204A, 204B is arranged between a first common Coriolis mass 218A, resp. 218B and a respective second common Coriolis mass 219A, resp. 219B.

The sense masses 204A, 204B are coupled to the Coriolis masses 218, 219 through third springs 226.

The third springs 226 are compliant in drive direction (parallel to the second drive axis Y), so as to decouple the Coriolis masses 218, 219 from the respective sense mass 204 in drive mode, and are rigid in sense direction, so as to transfer the sense movement of the Coriolis masses 218, 219 to the respective sense masses 204, as explained below with reference to Figures 17 and 18.

The sense masses 204 are anchored to the support 213 in a central position through respective sense elastic anchoring systems 225 which are shown only schematically in Figure 16 and allow rotation of each sense mass 204 around respective barycentric axes (central axes C, parallel to the vertical axis Z).

Figure 16 also shows an elastic structure 284 which couples the frames 210, 211 of the first elementary structure 201A to each other and to the support 213. Similar elastic structures 284 are also provided for the elementary structures 201B-201D, as schematically shown in Figure 15.

In detail, the elastic structure 284 comprises a first rocker element 276 and a second rocker element 277. The rocker elements 276, 277 are hinged to the support 213 at hinge points 278 and may rotate around axes directed parallel to the vertical axis Z and passing through the same hinge points 278.

The rocker elements 276, 277 are L-shaped having a first portion 276A, resp. 277A, and a second portion 276B, resp. 277B.

The first portion 276A, 277A is coupled to the first frame 210, resp. to the second frame 211 through fifth springs 281. The second portions 276B, 277B are coupled to each other through a sixth spring 282.

The fifth springs 281 are rather rigid, so as to transfer the drive movement of the frames 210, 211 to the first portions 276A, resp. 277A of the rocker elements 277, 278, while the sixth spring 282 is compliant in the plane, as indicated below.

The gyroscope 200 of Figure 15 may operate for sensing yaw or pitch movements, as described hereinafter with reference to Figures 16-18, wherein a single elementary structure 201 is shown. In particular, Figure 16 shows the forces (accelerations) acting on the elementary structure 201 in drive mode; Figure 17 shows the forces acting on the elementary structure 201 in yaw sense mode; and Figure 18 shows the forces acting on the elementary structure 201 in pitch sense mode.

With reference to Figure 16 and as indicated above, in the drive mode, the frames 210, 211 of the elementary structure 201 are operated in opposite directions, parallel to the second horizontal axis Y. The frames 210, 211 move with alternate linear motion, in phase opposition, and move away from and towards each other at each half-period of the drive signals, as indicated by arrows D1, D2, directed in opposite directions.

During the drive movement, the elastic structures 284 rotate and deform, so as to couple the movements of the frames 210, 211 of each elementary structure 201.

In detail, when the frames 210, 211 move in the drive directions D1, D2, they act on the first portions 276A, resp. 277A of the rocker elements 277, 278, causing them to rotate in opposite directions around the respective hinge points 278, as indicated by arrows 283.

Consequently, the second portions 276B, 277B also rotate, causing a deformation and displacement of the sixth spring 282, according to arrow 284.

In the drive mode shown in Figure 16, the Coriolis masses 218, 219 are pulled by the frames 210, 211 in opposite directions, being coupled thereto by the second springs 220, but the sense mass 204 is stationary, being constrained to the support 213 (as to the translation) and decoupled from the Coriolis masses 218, 219 through the third springs 226, which deform, in a manner not shown.

Figure 17 shows the gyroscope 200 in yaw sense mode. In this condition, it is responsive to accelerations caused by an angular speed Ω directed around the vertical axis Z.

In detail, in this case, the second springs 220 are configured to yield in a direction parallel to the first horizontal axis X (sense axis) and the third springs 226 are configured to be substantially rigid in this direction.

Here, a rotation of the gyroscope 200 around the vertical axis Z, in presence of the drive movement shown in Figure 16, due to the Coriolis effect, generates accelerations, on the Coriolis masses 218, 219, which are directed parallel to the first horizontal axis X, but in opposite directions (arrows 232, 233). The Coriolis masses 218, 219 thus move (in a first approximation) parallel to the first horizontal axis X, in opposite directions.

The opposite movement of the Coriolis masses 218, 219 causes the rotation of the sense mass 204 around its own central axis C, as shown by arrow 221.

The rotation of the sense mass 204 may be sensed through position sense structures (indicated in Figure 17 by 222), which generate corresponding measurement signals which vary based on the distance variation between the sense mass 204 and fixed electrodes facing it (distance variation in a direction parallel to the first horizontal axis X, indicated by arrows 223. Processing circuits not shown (for example as described with reference to Figures 10-13) allow the rotation angle of the sense mass 204 to be calculated, in a manner known to the person skilled in the art.

Figure 18 shows the gyroscope 200 in pitch sense mode. In this condition, it is responsive to accelerations caused by angular speeds Ω directed around the first horizontal axis X (as represented by arrow 224) and may sense the value thereof.

In detail, in this case, the second springs 220 are configured to yield in a direction parallel to the vertical axis Z and the third springs 226 are configured to be substantially rigid in this direction.

Consequently, in presence of an angular speed $\Omega$ directed around the first horizontal axis X, the Coriolis force causes the rotation of the Coriolis masses 218, 219 around symmetry axis S1 (being, as indicated above, also a barycentric axis for each pair 201A/201C and 201B/201C of elementary structures).

In particular, in each elementary structure 201, one of the Coriolis masses (in Figure 18, the first Coriolis mass 218) rotates away from the observer (symbol X, 245) and the other Coriolis mass (in Figure 18, the second Coriolis mass 219) rotates towards the observer (symbol •, 246).

The sense mass 204 rotates in the same direction, due to the coupling with the Coriolis masses 218, 219 through the third springs 226.

Position sense structures (indicated schematically by 230 in Figure 18), for example arranged below the sense mass 204, on two opposite sides with respect to the barycentric sense axis S1, allow the rotation of the sense mass 204 to be measured based on the distance variation between the latter and fixed electrodes facing it (distance variation in a direction parallel to the first horizontal axis X, indicated by arrows 223), in a per se known manner.

In practice, the elementary structure 201 of Figure 18 behaves as described above with reference to Figures 14B, 14C and therefore is resistant to liner vibrations, but not to rotational vibrations.

Conversely, the gyroscope 200 of Figure 15, in each vertical half (elementary structures 201A/201B and 201C/201D) behaves as described with reference to Figures 14D-14G, therefore it is resistant to both linear and rotational vibrations.

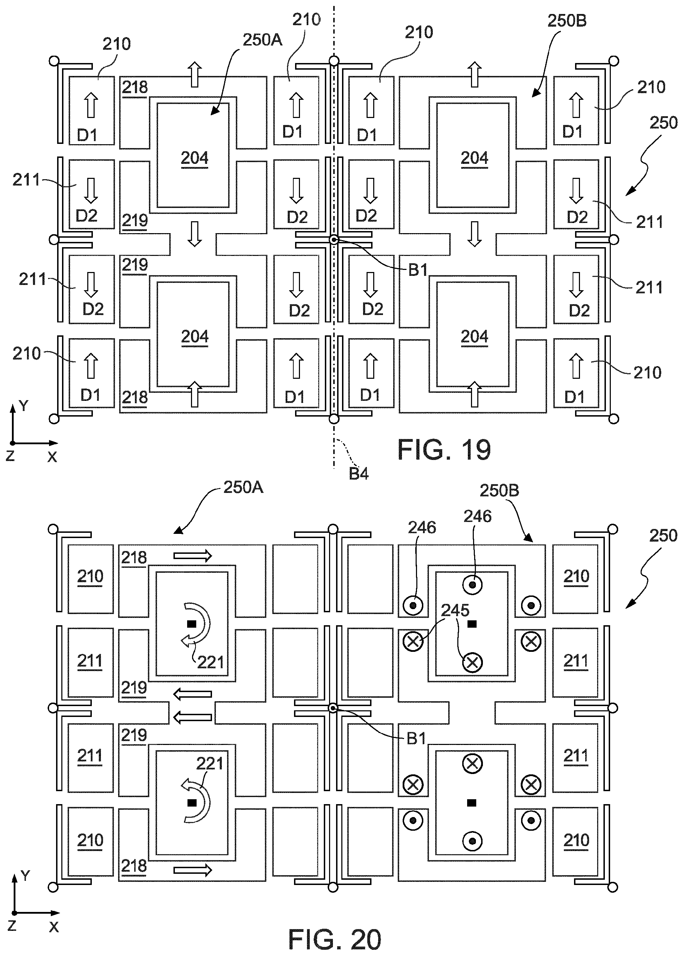

Figures 19 and 20 show a gyroscope 250 of biaxial type, configured to sense both yaw and pitch movements, that does not belong to the invention.

In particular, the gyroscope 250 has a center axis B4, parallel to the second horizontal axis Y, which divides the gyroscope 250 into a left half 250A (intended to sense yaw movements) and a right half 250B (intended to sense pitch movements).

As noted, the left half 250A and the right half 250B have a similar general structure and are driven in the same manner.

In particular, as already discussed above with reference to Figures 15-18 and as represented by arrows D1, D2 in Figure 19 (showing the drive mode), the frames 218, 219 move completely symmetrically in the left half 250A and in the right half 250B.

Conversely, due to the different configurations of the second and the third springs 220, 226 (as explained above with reference to Figures 16-18) and as shown in Figure 20 (showing the sense mode), the Coriolis masses 218, 219 and the sense masses 204 move differently in the two halves 250A, 250B.

In particular, the left half 250A rotates as represented by arrows 221, as described with reference to Figure 17, and the right half 250B rotates as represented by the symbols 245, 246, as described with reference to Figure 18.

Since the gyroscope 250 of Figures 19 and 20 is based on the structure shown and described in Figures 14D-14G, it is resistant to both linear and rotational vibrations.

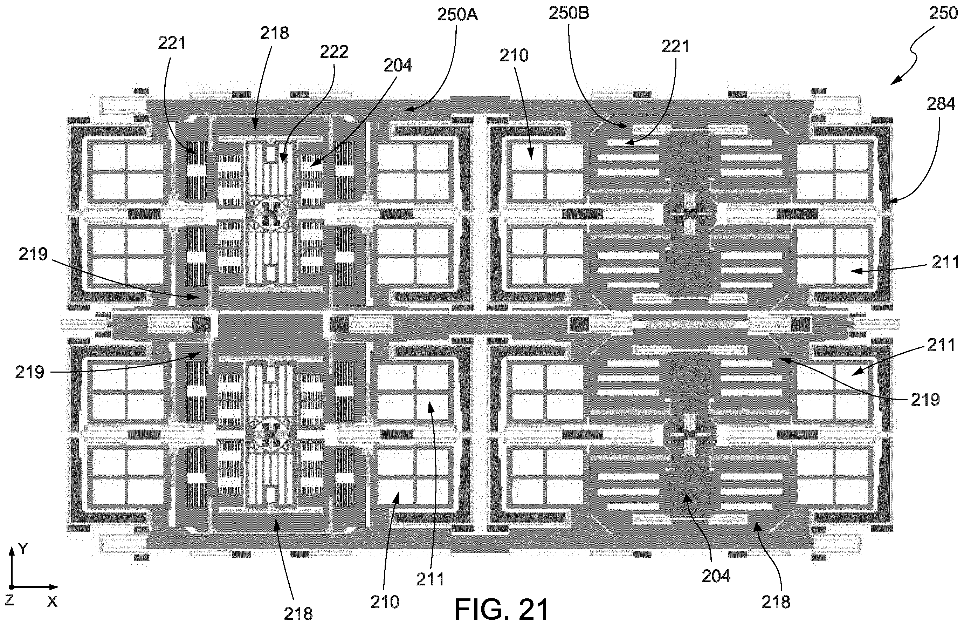

A possible implementation of the gyroscope 250 of Figure 20 is shown in Figure 21, wherein quadrature compensation structures 221 are also visible as well as the sense structures 222 in the left half 250A.

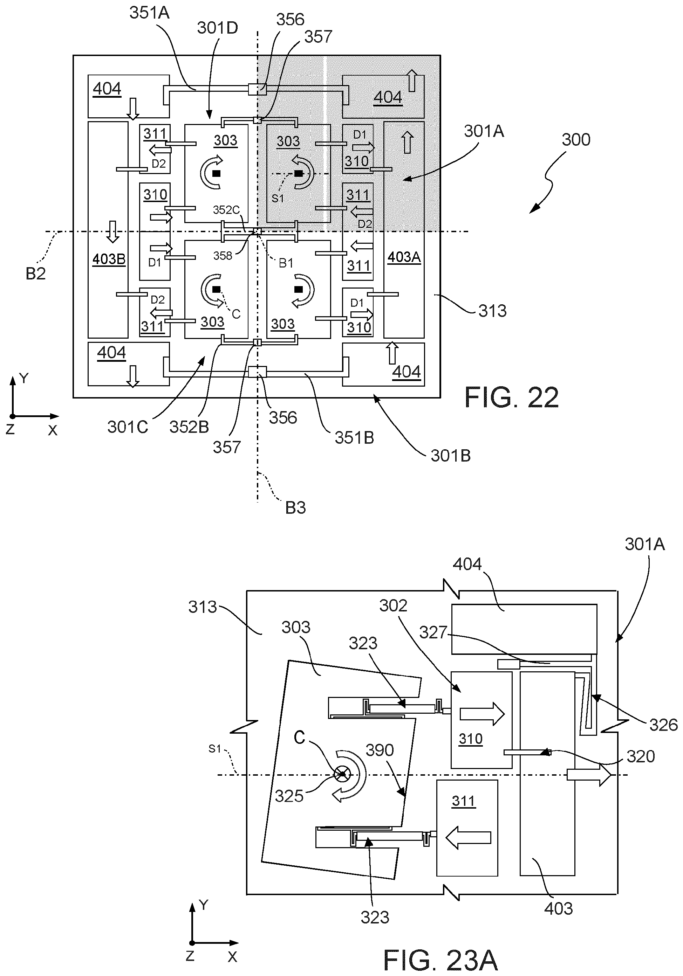

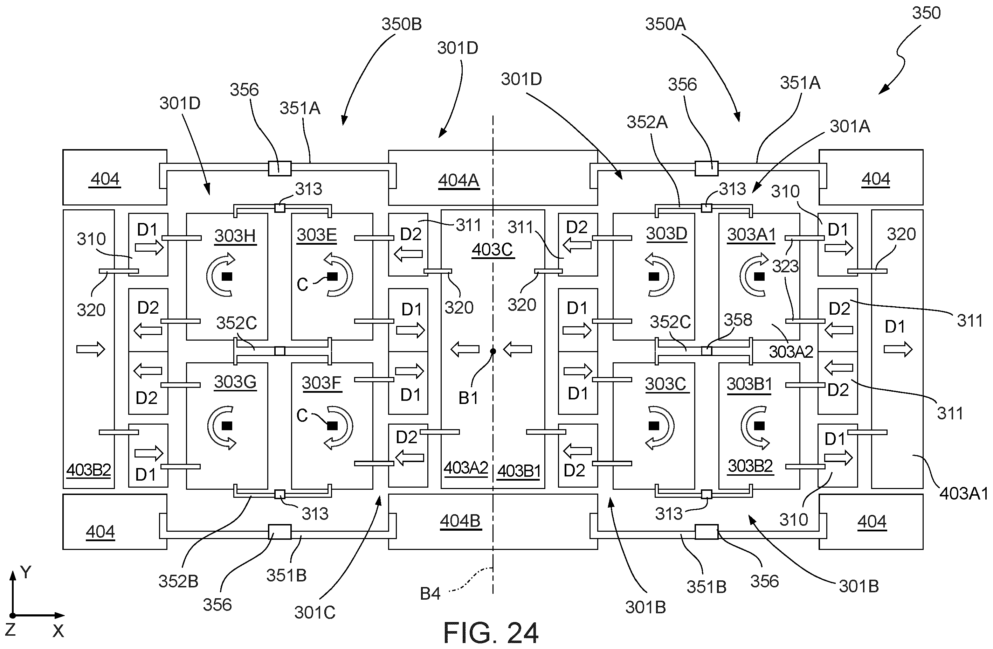

Figure 22 shows a principle diagram of a gyroscope 300 of biaxial type, capable of sensing yaw and roll movements by an elementary structure having a drive portion, a yaw sense portion and a roll sense portion. As explained below, gyroscope 300 of Figure 22 represents half of the gyroscope 350 of figures 24-26.

Since, each elementary structure has sense portions for two different movements, these portions are active in an alternative manner, according to the instant rotational field applied to the gyroscope 300.

In detail, the gyroscope 300 is of MEMS type and has a substantially planar structure with greater dimensions parallel to a first horizontal axis X and to a second horizontal axis Y of an inertial reference system XYZ.

The gyroscope 300 has a first barycentric axis B1 parallel to a vertical axis Z of the inertial reference system XYZ and comprises four elementary structures 301 arranged symmetrically with respect to a second and a third barycentric axis B2, B3 parallel, respectively, to the first and the second horizontal axis X, Y. Where necessary, the four elementary structures 301 are also referred to as first, second, third and fourth elementary structures 301A, 301B, 301C and 301D (clockwise in Figure 22, with the first elementary structure 301A at the top right of Figure 22).

With reference also to Figure 23A, showing for example the first elementary structure 301A, each elementary structure 301 comprises a drive portion 302; a roll sense mass 303, a Coriolis mass 403 and a yaw sense mass 404.

The roll sense mass 303 is the roll sense portion; the Coriolis mass 403 and the yaw sense mass 404 are the yaw sense portion; and the drive structure 302 is common to both the roll sense portion (303) and the yaw sense portion (403, 404).

The drive structure 302 of each elementary structure 301 comprises two drive assemblies 310, 311 configured to translate along opposite drive directions, alternately and in phase opposition to each other, along a drive axis, here parallel to the first horizontal axis X; the drive assemblies 310, 311 are here arranged side by side to each other parallel to the second horizontal axis Y.

Furthermore, here the drive assemblies 310, 311 of adjacent elementary structures 301A and 301D or 301B and 301C, are operated in phase opposition, as shown by arrows D1, D2 of Figure 22 and explained below.

The roll sense mass 303 is here centrally anchored through a first sense anchoring system 325 which allows the rotation thereof around an own central axis C. The roll sense mass 303 is also directly coupled to the drive structure 302 through coupling elastic systems 323 which, in drive mode, couple the drive structure 302 to the roll sense mass 303 and cause the alternate rotation of the latter around its central axis C.

In the embodiment shown, the roll sense mass 303 has a rectangular shape, with a symmetry axis S1 parallel to the first horizontal axis X and a drive side 390 perpendicular to symmetry axis S1 and facing the drive structure 302.

In particular, the roll sense mass 303 is coupled to the first and the second drive assemblies 310, 311 at two portions thereof arranged on opposite sides with respect to symmetry axis S1 (in Figure 23A, above and, respectively, below symmetry axis S1) so that the opposite movement of the drive assemblies 310, 311 determines the alternate drive rotation thereof.

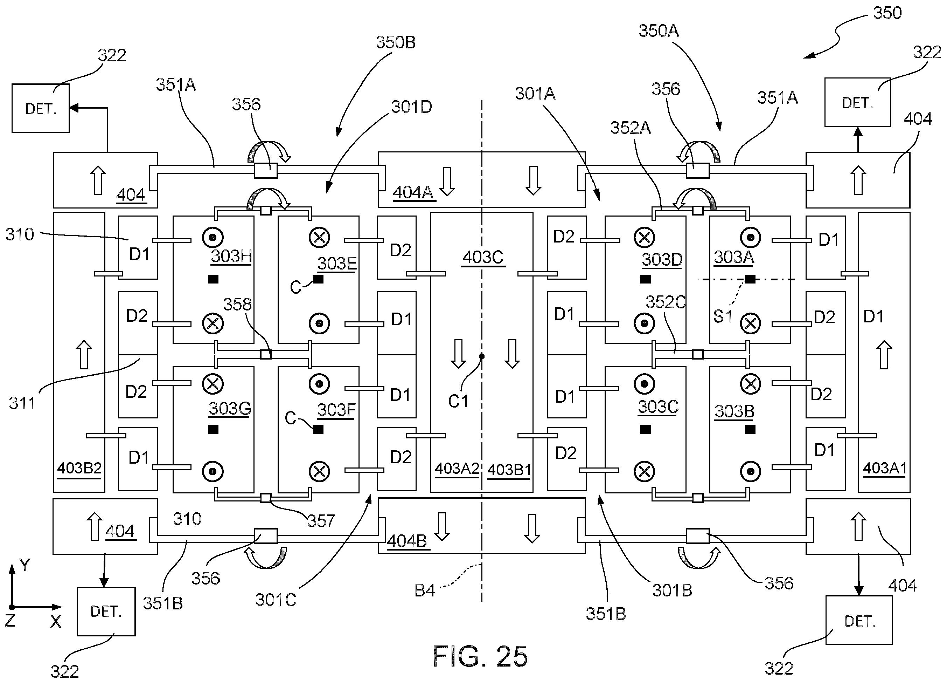

The coupling elastic systems 323 are therefore substantially rigid in the drive direction (parallel to the first horizontal axis X), but are compliant in a direction parallel to the vertical axis Z, to allow the roll movement, as explained below with reference to Figure 25.

The Coriolis mass 403 here extends laterally to the drive structure 302, on one side thereof opposite to the roll sense mass 303.

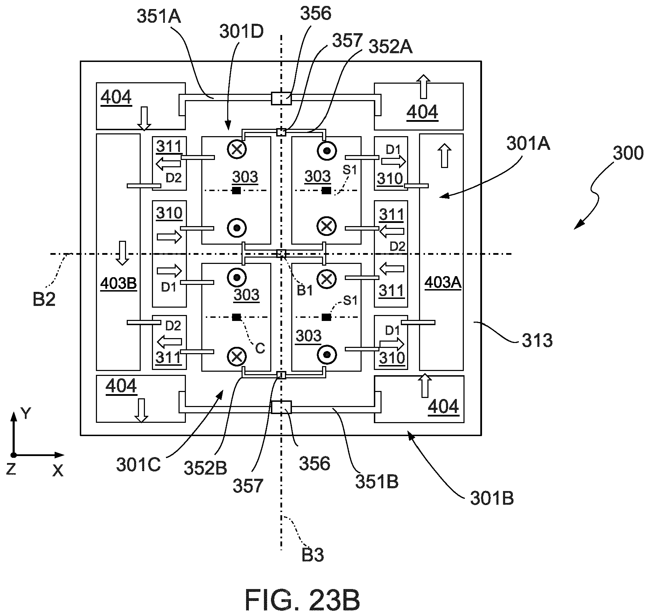

The Coriolis mass 403 here has a generally rectangular shape elongated parallel to the second horizontal axis Y and is coupled to one of the two drive assemblies 310, 311 (in Figures 22, 23A, 23B, to the first drive assembly 310) through drive springs 320 rigid in the drive direction (parallel to the first horizontal axis X), but compliant in the planar direction perpendicular to the drive direction (here, parallel to the second horizontal axis Y).

In this manner, the Coriolis mass 403 is actuated so as to move (in drive mode) parallel to the first horizontal axis X, together with one of the two drive assemblies 310, 311, but it may move in a perpendicular direction (in sense mode) parallel to the second horizontal axis Y, as explained below with reference to Figure 25.

The yaw sense mass 404 is coupled to the Coriolis mass 403 through a sense spring system 326 which decouple the yaw sense mass 404 from the Coriolis mass 403 in drive mode (in drive direction, here parallel to the first horizontal axis X), but couple the masses 403, 404 in yaw sense mode (rotation of the gyroscope 300 around the barycentric axis B1 300, as explained below with reference to Figure 25).

The sense spring system 326 also couples the yaw sense mass 404 to a second sense anchoring system 327 integral with a support 313, for example a semiconductor substrate, and compliant in sense direction (here parallel to the second horizontal axis Y).

In the gyroscope 300 of Figure 22, the Coriolis mass 403 of the first elementary structure 301A is joined to the Coriolis mass 403 of the second elementary structure 301B to form a first common Coriolis mass 403A; similarly, the Coriolis mass 403 of the third elementary structure 301C is joined to the Coriolis mass 403 of the fourth elementary structure 301D to form a second common Coriolis mass 403B.

Furthermore, the yaw sense masses 404 are here coupled two by two through first bridge elements 351A, 351B, extending between the first and the fourth elementary structures 301A, 301D, respectively between the second and the third elementary structures 301B, 301B.

The first bridge elements 351A, 351B extend here parallel to the first horizontal axis X and are anchored to the support 313 in respective first bridge anchors 356.

Furthermore, the roll sense masses 303 are here coupled two by two through second bridge elements 352A, 352B extending between the first and the fourth elementary structures 301A, 301D, respectively between the second and the third elementary structures 301B, 301B, on external sides of these elementary structures 301A-301D, remote to the second barycentric axis B2 of the gyroscope 300.

The second bridge elements 352A, 352B extend here parallel to the first horizontal axis X and to the first bridge elements 351A, 351B and are anchored to the support 313 at respective second bridge anchors 357, arranged in a central position.

Furthermore, the roll sense masses 303 are all coupled by a central bridge element 352C, extending parallel to the first horizontal axis X, along the second barycentric axis B2 of the gyroscope 300.

The central bridge element 352C is also anchored to the support 313 in a third bridge anchor 358, at the first barycentric axis B1.

In practice, the first elementary structure 301A and the fourth elementary structure 301D form a pair of elementary structures 301A/301D; the same for the second and the third elementary structure 301D (pair 301B/301C).

In this manner, as indicated above, here the drive assemblies 310, 311 of pairs 301A/301D and 301/301C of elementary structures 301 are operated in phase opposition, and cause a drive rotation of the respective roll sense masses 303 in opposite directions (so for example the first elementary structure 301A has a roll sense mass 303 having opposite drive rotation -in phase opposition- with respect to the fourth elementary structure 301D, in addition to the second elementary structure 301B; conversely it has a drive movement concordant -in phase- with the third drive structure 301C).

The gyroscope 300 of Figure 22 may operate for sensing yaw and pitch movements. In particular, Figures 22 and 23A show the forces (accelerations) acting on the elementary structure 301A in drive mode; Figure 23B shows the forces acting on the elementary structure 301 in yaw and pitch sense mode.

With reference to Figures 22, 23A and as indicated above, in the drive mode, the frames 310, 311 of each elementary structure 301 are operated in the opposite direction, parallel to the second horizontal axis Y. Furthermore, the first frames 310 of each pair of elementary structures 301A/301D, 301B/301D are operated in the opposite direction. The frames 310, 311 move with alternate linear motion, in phase opposition, as indicated by arrows parallel to the first horizontal axis X in Figures 22, 23A.

The corresponding sense movements are indicated in Figure 23B. In particular, as to the yaw movement, the first common Coriolis mass 403A translates parallel to the second horizontal axis Y in opposite directions (in counter-phase) with respect to the second common Coriolis mass 403A.

Furthermore, as to the roll movement, the roll sense masses 303 of pairs 301A/301D, resp. 301B/301C rotate around the respective symmetry axes S1 (parallel to the first horizontal axis X) in opposite directions (cross symbols and dot symbols), as the roll sense masses 303 on the two sides of the second barycentric axis B2, as described in detail below, with reference to Figures 24 and 25.

In sense mode, the first bridge elements 351A, 351b rotate around respective rotation axes parallel to the vertical axis Z and passing through the first bridge anchors 356, in the same direction (clockwise or counterclockwise).

Furthermore, the second bridge elements 352A, 352B and the central bridge element 352C rotate around a same rotation axis parallel to the second horizontal axis Y and passing through the bridge anchors 357, 358. In practice, the second bridge elements 352A, 352B rotate in a same direction to each other and in opposite direction to the central bridge element 352C, following the movement of the portions coupled thereto of the sense masses 303.

Figures 24 and 25 show a gyroscope 350 of a MEMS, biaxial type, configured to sense yaw and roll movements and obtained by doubling the gyroscope 300 of Figure 22.

In detail, the gyroscope 350 has a central axis B4, which is parallel to the second horizontal axis Y and divides the gyroscope 350 into a first and a second part 350A, 350B.

Here, the first and the second parts 350A, 350B have the same structure as the gyroscope 300 of Figure 22. Consequently, like elements have been indicated using like numbers. However, where useful for understanding, the roll sense masses 303 are also identified as roll sense masses 303A-303H, wherein the sense masses 303A-303D are part of a respective elementary structure 301A-301D of the first part 350A and the sense masses 303E-303H form part, each, of a respective elementary structure 301A-301D of the second part 350B. Furthermore, for better understanding, the common Coriolis masses 403A, 403B are identified where useful also as first common Coriolis mass 403A1, resp. 403A2 and second common Coriolis mass 403B1, resp. 403B2, depending on whether they belong to the first, respectively, the second part 350A, 350B.

The two parts 350A, 350B of the gyroscope 350 are arranged side by side to each other along the first horizontal axis X and form a right half (here forming the first part 350A) and a left half (here forming the second part 350B), with the first and the second elementary structures 301A, 301B of the second part 350B (left half) adjacent and contiguous to the fourth and, respectively, third elementary structure 301D, 301C of the first part 350A (right half).

The gyroscope 350 is therefore not symmetrical with respect to the central axis B4 as regards driving (but it is as regards sensing, as discussed below).

As indicated above and shown in Figure 24, the two parts 350A, 350B of the gyroscope 350 are driven in opposite manner, that is the drive assemblies 310, 311 of the first, second, third and fourth elementary structures 301A-301D in the two parts 350A, 350B have opposite movements (in phase opposition), as shown by arrows D1, D2 in Figure 24. In this manner, the drive assemblies 310, 311 of adjacent elementary structures 301 (close to the central axis B4) are driven in phase.

Since the first common Coriolis mass 403A2 of the second part 350B is contiguous and driven in the same manner as the second common Coriolis mass 403B1 of the first part 350A (same drive movement), they move in the same manner also in sense mode; thus they are joined here to form a central sense mass 403C.

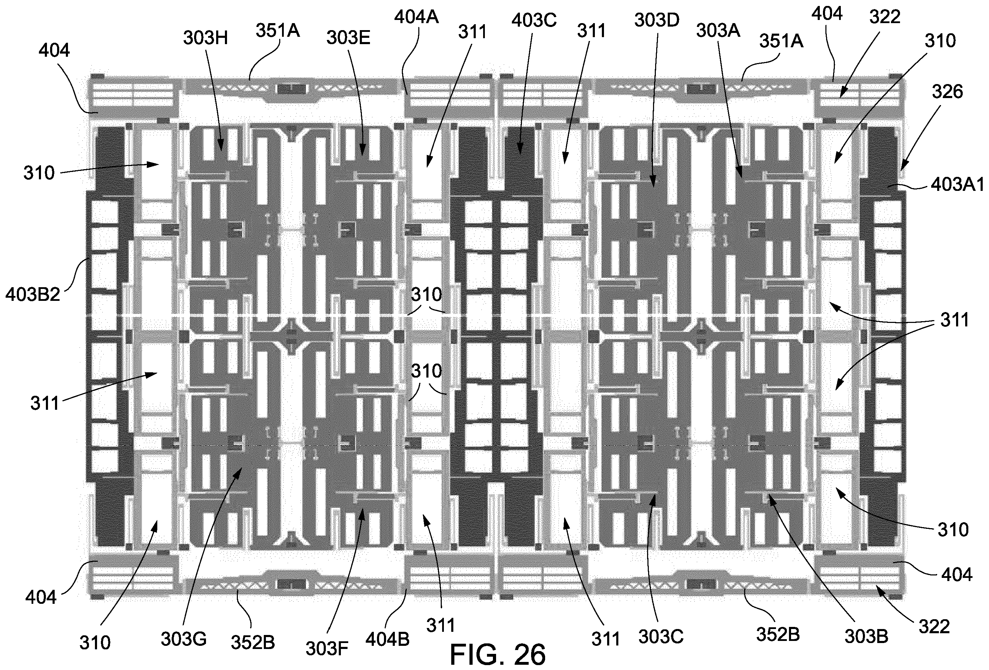

Similarly, the adjacent yaw sense masses 404 of the first and the second parts 350A, 350B of the gyroscope 350 may be joined to form central yaw sense masses 404A, 404B, coupled to opposite ends of the central Coriolis mass 403C. Alternatively, as in the implementation shown in Figure 26, they may be maintained distinct.

Consequently, in drive mode, the central sense mass 403C oscillates, with translational motion parallel to the first horizontal axis X, in phase opposition (counter-phase) to the first common Coriolis mass 403A1 of the first part 350A and to the second common Coriolis mass 403B2 of the second part 350B, as shown by arrows D1, D2.

The yaw sense masses 404, on the other hand, are decoupled from the drive movement.

Furthermore, in drive mode, the roll sense masses 303 rotate around their own barycentric axes as explained above with reference to Figure 23A; also here, due to the existing driving, the roll sense masses 303 of the two parts 350A, 350B of the gyroscope 350 do not rotate symmetrically. For example, the roll sense mass 303E (belonging to the first elementary structure 301A of the second part 350B) rotates in the same direction as the roll sense mass 303D (belonging to the fourth elementary structure 301D of the first part 350A and adjacent, along the first horizontal axis X, to the just-mentioned roll sense mass 303E); similarly, the roll sense mass 303F (belonging to the second elementary structure 301B of the second part 350B) rotates in the same direction as the roll sense mass 303C (belonging to the third elementary structure 301C of the first part 350A), and so on.

Figure 25 shows the movements of the gyroscope 350 in sense mode, and precisely in presence of yaw and roll movements so that the movements shown for the roll sense masses 303, for the Coriolis masses 403 and for the yaw sense masses 404 generally do not occur simultaneously.

In detail, in presence of a yaw movement, the Coriolis masses 403 move as indicated in Figure 25; then, the central Coriolis mass 403C translates parallel to the second horizontal axis Y (in Figure 25, downwards), pulling the central yaw sense masses 404A, 404B in this direction; the first common Coriolis mass 403A1 of the first part 350A and the second common Coriolis mass 403B2 of the second part 350B translate in an opposite direction with respect to the central Coriolis mass 403C (in Figure 25, upwards), pulling the yaw sense masses 404 coupled thereto in the same direction.

In this movement, due to the opposite translation directions of the Coriolis masses 403A1, 403B2 with respect to the central Coriolis mass 403C (and therefore of the respective yaw sense masses 404), the first bridge elements 351A, 351B rotate around axes passing through the respective first bridge anchors 356 and parallel to the vertical axis Z, as shown in Figure 25.

In particular, the first bridge elements 351A, 351B of the first part 350A (on the right) both turn in one direction (in Figure 25, counterclockwise) and the first bridge elements 351A, 351B of the second part 350B (on the left) both turn in the opposite direction (in Figure 25, clockwise).

The movement of the yaw sense masses 404 may be sensed through position sense structures 322 associated therewith, schematically represented in Figure 25 (see also Figure 26).

In presence of a roll movement, each roll sense mass 303 rotates around the respective barycentric sense axes S1 (shown in Figure 25 only for the roll sense mass 303A).

Due to the opposite drive direction of the roll sense masses 303 due to the drive assemblies 310, 311, they rotate in opposite directions, for example as represented by the cross symbols (moving towards the support 113 and away from an observer) and by the dot symbols (moving away from the support 113 and towards the observer).

In this sense mode, the second bridge elements 352A, 352B and the central bridge element 352C rotate around axes parallel to the second horizontal axis Y and passing through the respective second and third bridge anchors 357, 358, following the opposite movement of the coupled portions of the pairs of roll sense masses 303 (adjacent along the first horizontal axis X) and the concordant movement of the coupled portions of the roll sense masses 303 adjacent along the second horizontal axis Y, similarly to what has been described above with reference to Figure 23B.

The gyroscope 350 of Figure 25 is based on the structure shown and described in Figures 14D-14G. In fact, as to the yaw sense structures, the Coriolis masses 403A1, 403C and 403B2 are equivalent respectively to the movable masses M1, M2-3 and M4 of Figures 14D and 14E and are driven by the drive assemblies 310, 311 so that, along the first horizontal axis X, the Coriolis masses 403A1, 403B2 farther from the central axis B4 move in a same direction to each other and in an opposite direction with respect to the Coriolis masses close to the central axis B4 (central Coriolis mass 403C), as shown by the arrows in Figure 25. The same applies to the sense mode, where Coriolis masses 403A1, 403B2 have movements (along the second horizontal axis Y) directed in a mutually concordant direction and opposite with respect to the central movable mass 403C, as shown by the arrows in Figure 26.

Conversely, linear vibrations, which act on the gyroscope 350, tend to cause all the Coriolis masses 403A-403C (and the yaw sense masses 404 integral therewith in sense mode) to vibrate in the same direction (positive or negative direction along the second horizontal axis Y). Here, the first bridge elements 351A, 351B prevent this spurious movement; furthermore, since possible residual movements have different directions with respect to the sense movements in some yaw sense masses 404, any residual vibrations may be canceled by the sensed signals.

Furthermore, the pairs of Coriolis masses 403A-403C (and the yaw sense masses 404 integral therewith in sense mode) are also resistant to rotational vibrations, because these would tend to cause the Coriolis masses 403A1, 403B2 that are farther from the central axis B4 (as well as each half of the central Coriolis mass 403C) to move in opposite directions around the barycenter C1 of the gyroscope 350, rotation that is prevented by the geometry and in any case would give rise to signals different from yaw sense signals and therefore cancellable.

The same applies to the roll sense portion.

Here the configuration and connection of the drive assemblies 310, 311 and of the roll sense masses 303 coupled along the second horizontal axis Y (four half-masses, also indicated in Figure 24 as 303A1, 303A2, 303B1, 303B2, joined two by two to form, for example, the roll sense masses 303A and 303B) corresponds to what has been described above with reference to Figures 14F and 14G and therefore also the roll sense portion is resistant to both linear and rotational vibrations.

According to another possible identification, the movable masses M1-M4 of Figures 14F and 14G correspond to the pairs of roll sense masses 303A-303B, 303C-303D, 303E-303F and 303G-303H.

A possible implementation of the gyroscope 350 of Figures 22-25 is shown in Figure 26.

The gyroscope described here is therefore particularly robust, has balanced driving and is insensitive to linear and/or rotational accelerations.

In particular, in the minimum structure (elementary structures of Figures 1-4, 14B-14C, 16-18 and 23A, 23B), it is insensitive to spurious linear vibrations, while in the configurations described with reference to Figures 14D-14G, 15, 19-21, 22, 24-26 it is resistant to both linear and rotational spurious vibrations.

The Coriolis force applied to the drive masses cannot generate torques able to cause spurious movements; therefore the drive motion cannot be forced by external accelerations.

As discussed above, the sense movements (yaw and/or pitch and/or roll movements) are insensitive to external linear or angular accelerations and cannot be forced thereby.

The structures may be provided in a compact manner and therefore at reduced costs; in particular, the biaxial solutions allow sensing of external rotational fields acting around different rotation axes with a small structure, capable of providing even redundant signals (for example usable as described with reference to Figures 10-13), also simplifying the signal processing by an associated ASIC.

Finally, it is clear that modifications and variations may be made to the gyroscope described and illustrated herein without thereby departing from the scope of the present invention, as defined in the attached claims.

**Claims**

1. A MEMS gyroscope (350), comprising:

   a fixed structure (313);
   a first movable mass (403A1), the first movable mass being configured to move with respect to the fixed structure along a first drive direction and along a first sense direction, transverse to the first drive direction;
   a first drive assembly (310), coupled to the first movable mass and configured to generate a first alternate drive movement in the first drive direction;
   a first drive elastic structure (320), coupled to the first movable mass and to the first drive assembly, the first drive elastic structure being rigid in the first drive direction, being configured to transfer the first alternate drive movement to the first movable mass and being compliant in the first sense direction;
   a second movable mass (;403B1), the second movable mass being configured to move with respect to the fixed structure in a second drive direction parallel to the first drive direction and in a second sense direction parallel to the first sense direction;
   a second drive assembly (311), coupled to the second movable mass and configured to generate a second alternate drive movement in the second drive direction, the second alternate drive movement being in phase opposition with respect to the first alternate drive movement; and
   a second drive elastic structure (320), coupled to the second movable mass and to the second drive assembly, the second drive elastic structure being rigid in the second drive direction, configured to transfer the second alternate drive movement to the second movable mass, and compliant in the second sense direction,
   a third movable mass (403A2), the third movable mass being configured to move with respect to the fixed structure (313) in a third drive direction, parallel to the first drive direction, and in a third sense direction, parallel to the first sense direction;
   a third drive assembly (311), coupled to the third movable mass and configured to generate a third alternate drive movement in the third drive direction, the third alternate drive movement in phase with the second alternate drive movement;
   a third drive elastic structure (320), coupled to the third movable mass and to the third drive assembly, the third drive elastic structure rigid in the third drive direction, configured to transfer the third alternate drive movement to the third movable mass and compliant in the third sense direction,
   a fourth movable mass (403B2), the fourth movable mass configured to move with respect to the fixed structure in a fourth drive direction, parallel to the first drive direction, and in a fourth sense direction, parallel to the first sense direction;
   a fourth drive assembly (310), coupled to the fourth movable mass and configured to generate a fourth alternate drive movement in the fourth drive direction, the fourth alternate drive movement in phase with the first alternate drive movement; and
   a fourth drive elastic structure (320), coupled to the fourth movable mass and the fourth drive assembly, the fourth drive elastic structure rigid in the fourth drive direction, configured to transfer the fourth alternate drive movement to the fourth movable mass and compliant in the fourth sense direction,
   wherein:

      the second movable mass (403B1) and the third movable mass (403A1) are joined and monolithic to each other,
wherein the first, second, third and fourth movable masses (403A1, 403B1, 403A2, 403B2) are a yaw sense portion,

**characterized in that**

the MEMS gyroscope further comprises a pitch/roll sense portion, the pitch/roll sense portion comprising:

a fifth movable mass (303A1), the fifth movable mass configured to move with respect to the fixed structure (313) in a fifth drive direction, parallel to the first drive direction, and in a fifth sense direction, transverse to the fifth drive direction and to the first sense direction;

a fifth drive elastic structure (323), coupled to the fifth movable mass and to the first drive assembly (310), the fifth drive elastic structure rigid in the fifth drive direction, configured to transfer the first alternate drive movement to the fifth movable mass and compliant in the fifth sense direction;

a sixth movable mass (303A2), the sixth movable mass configured to move with respect to the fixed structure in a sixth drive direction, parallel to the first drive direction, and in a sixth sense direction, parallel to the fifth sense direction;

a fifth drive assembly (311), coupled to the sixth movable mass and configured to generate a fifth alternate drive movement in the sixth drive direction, the fifth alternate drive movement in phase opposition with the first alternate drive movement; and

a sixth drive elastic structure (323), coupled to the sixth movable mass and the fifth drive assembly (311), the sixth drive elastic structure rigid in the sixth drive direction, configured to transfer the fifth alternate drive movement to the sixth movable mass and compliant in the sixth sense direction.

2. The MEMS gyroscope according to the preceding claim, further comprising:

a first sense elastic system (404,326, 327), coupling the first movable mass (403A1) to the fixed structure (313) and configured to allow movements of the first movable mass with respect to the fixed structure in the first drive direction and in the first sense direction;

a second sense elastic system (4404, 326327), coupling the second movable mass (403B1) to the fixed structure and configured to allow movements of the second movable mass with respect to the fixed structure in the second drive direction and in the second sense direction.

3. The MEMS gyroscope according to claim 2, wherein:

the first sense elastic system comprises a first sense mass (404), a first sense elastic structure (326) and a first anchoring elastic structure (327), the first sense elastic structure (326) being coupled between the first movable mass (403A1) and the first sense mass (404), compliant in the first drive direction and rigid in the first sense direction, the first anchoring elastic structure (327) being coupled between the first sense mass and the fixed structure (313) and compliant in the first sense direction;

the second sense elastic system comprises a second sense mass (404A), a second sense elastic structure (326) and a second anchoring elastic structure (327), the second sense elastic structure (326) being coupled between the second movable mass (403B1) and the second sense mass (404A), compliant in the second drive direction and rigid in the second sense direction, the second anchoring elastic structure (327) being coupled between the second sense mass (404A) and the fixed structure and compliant in the second sense direction; and

the first sense mass and the second sense mass are coupled to respective position sense structures (322).

4. The MEMS gyroscope according to any of the preceding claims, further comprising:

a third sense elastic system (404A, 326, 327) coupling the third movable mass (403A2) to the fixed structure (313) and configured to allow movements of the third movable mass with respect to the fixed structure in the third drive direction and in the third sense direction;

a fourth sense elastic system (326, 327), coupling the fourth movable mass (403B2) to the fixed structure and configured to allow movements of the fourth movable mass with respect to the fixed structure in the fourth drive direction and in the fourth sense direction.

5. The MEMS gyroscope according to claim 4, wherein:

the third sense elastic system comprises a third sense mass (404B), a third sense elastic structure (326) and a third anchoring elastic structure (327), the third sense elastic structure (326) coupled between the third movable mass (403A2) and the third sense mass, compliant in the third drive direction and rigid in the third sense direction, the third anchoring elastic structure (327) coupled between the third sense mass and the fixed structure and compliant in the third sense direction;

the fourth sense elastic system comprises a fourth sense mass (404), a fourth sense elastic structure (326) and a fourth anchoring elastic structure (327), the fourth sense elastic structure (326) coupled between the fourth movable mass (403B2) and the fourth sense mass, compliant in the fourth drive direction and rigid in the fourth sense direction, the fourth anchoring elastic structure (327) coupled between the fourth sense mass and the fixed structure and compliant in the fourth sense direction; and

the third sense mass and the fourth sense mass are coupled to respective position sense structures (322).

6. The MEMS gyroscope according to any of claims 3-5, further comprising a first bridge element (351A), coupling the first and the second sense masses (404, 404AB), the first bridge element (351A) coupled to the fixed structure (313) and rotatable around a first vertical axis transverse to the first drive direction and to the first sense direction.

7. The MEMS gyroscope according to any of the preceding claims, wherein the pitch/roll sense portion further comprises:

a seventh movable mass (303B1), the seventh movable mass configured to move with respect to the fixed structure (313) in a seventh drive direction, parallel to the first drive direction, and in a seventh sense direction, parallel to the fifth sense direction;

a sixth drive assembly (311), coupled to the seventh movable mass and configured to generate a sixth alternate drive movement in the seventh drive direction, the sixth alternate drive movement in phase with the first alternate drive movement;

a seventh drive elastic structure (323), coupled to the seventh movable mass and to the sixth drive assembly (310), the seventh drive elastic structure rigid in the seventh drive direction, configured to transfer the sixth alternate drive movement to the seventh movable mass and compliant in the seventh sense direction;

an eighth movable mass (303B2), the eighth movable mass configured to move with respect to the fixed structure in an eighth drive direction, parallel to the first drive direction, and in an eighth sense direction, parallel to the fifth sense direction;

a seventh drive assembly (310), coupled to the eighth movable mass and configured to generate a seventh alternate drive movement in the eighth drive direction, the seventh alternate drive movement in phase with the first alternate drive movement;

an eighth drive elastic structure (323), coupled to the eighth movable mass and the seventh drive assembly, the eighth drive elastic structure rigid in the eighth drive direction, configured to transfer the seventh alternate drive movement to the eighth movable mass and compliant in the eighth sense direction.

8. The MEMS gyroscope according to the preceding claim, wherein the fifth and the sixth movable mass (303A1, 303A2) are joined to each other and monolithic and wherein the seventh and the eighth movable masses (303B1, 303B2) are joined to each other and monolithic.

9. The MEMS gyroscope according to claim 7 or 8, further comprising a fifth anchoring elastic structure (352C) elastically coupling the fifth, the sixth, the seventh and the eighth movable masses.

10. The MEMS gyroscope according to any of claims 7-9, further comprising:

a ninth movable mass (303D), the ninth movable mass configured to move with respect to the fixed structure (313) in a ninth drive direction, parallel to the first drive direction, and in a ninth sense direction, parallel to the fifth movement direction;

a ninth drive elastic structure (323), coupled to the ninth movable mass and the second drive assembly (311), the ninth drive elastic structure rigid in the second drive direction, configured to transfer the second alternate drive movement to the ninth movable mass and compliant in the ninth sense direction; and

a second bridge element (352A) extending between the fifth (303A1) and the ninth (303D) movable masses, the second bridge element coupled to the fixed structure (313) and rotatable around a second vertical axis, transverse to the first drive direction and parallel to the fifth sense direction.

**Patentansprüche**

1.  MEMS-Gyroskop (350), das Folgendes umfasst:

eine feste Struktur (313);
eine erste bewegliche Masse (403A1), wobei die erste bewegliche Masse so eingerichtet ist, dass sie sich in Bezug auf die feste Struktur entlang einer ersten Antriebsrichtung und entlang einer ersten Erfassungsrichtung quer zu der ersten Antriebsrichtung bewegt;
eine erste Antriebsbaugruppe (310), die mit der ersten beweglichen Masse gekoppelt und so eingerichtet ist, dass sie eine erste alternative Antriebsbewegung in der ersten Antriebsrichtung erzeugt;
eine erste elastische Antriebsstruktur (320), die mit der ersten beweglichen Masse und der ersten Antriebsbaugruppe gekoppelt ist, wobei die erste elastische Antriebsstruktur in der ersten Antriebsrichtung starr ist, so eingerichtet ist, dass sie die erste alternative Antriebsbewegung auf die erste bewegliche Masse überträgt, und in der ersten Erfassungsrichtung nachgiebig ist;
eine zweite bewegliche Masse (;403B1), wobei die zweite bewegliche Masse so eingerichtet ist, dass sie sich in Bezug auf die feste Struktur in einer zweiten Antriebsrichtung parallel zu der ersten Antriebsrichtung und in einer zweiten Richtung parallel zu der ersten Erfassungsrichtung bewegt;
eine zweite Antriebsbaugruppe (311), die mit der zweiten beweglichen Masse gekoppelt und so eingerichtet ist, dass sie eine zweite alternative Antriebsbewegung in der zweiten Antriebsrichtung erzeugt, wobei die zweite alternative Antriebsbewegung gegenüber der ersten alternativen Antriebsbewegung phasenentgegensetzt ist; und
eine zweite elastische Antriebsstruktur (320), die mit der zweiten beweglichen Masse und der zweiten Antriebsbaugruppe gekoppelt ist, wobei die zweite elastische Antriebsstruktur in der zweiten Antriebsrichtung starr ist, so eingerichtet ist, dass sie die zweite alternative Antriebsbewegung auf die zweite bewegliche Masse überträgt, und in der zweiten Erfassungsrichtung nachgiebig ist,
eine dritte bewegliche Masse (403A2), wobei die dritte bewegliche Masse so eingerichtet ist, dass sie sich in Bezug auf die feste Struktur (313) in einer dritten Antriebsrichtung parallel zu der ersten Antriebsrichtung und in einer dritten Richtung parallel zu der ersten Erfassungsrichtung bewegt;
eine dritte Antriebsbaugruppe (311), die mit der dritten beweglichen Masse gekoppelt und so eingerichtet ist, dass sie eine dritte alternative Antriebsbewegung in der dritten Antriebsrichtung erzeugt, wobei die dritte alternative Antriebsbewegung gegenüber der zweiten alternativen Antriebsbewegung phasenentgegengesetzt ist;
eine dritte elastische Antriebsstruktur (320), die mit der dritten beweglichen Masse und der dritten Antriebsbaugruppe gekoppelt ist, wobei die dritte elastische Antriebsstruktur in der dritten Antriebsrichtung starr ist, so eingerichtet, dass sie die dritte alternative Antriebsbewegung auf die dritte bewegliche Masse überträgt, und in der dritten Richtung nachgiebig ist,
eine vierte bewegliche Masse (403B2), wobei die vierte bewegliche Masse so eingerichtet ist, dass sie sich in Bezug auf die feste Struktur in einer vierten Antriebsrichtung parallel zu der ersten Antriebsrichtung und in einer vierten Richtung parallel zu der ersten Erfassungsrichtung bewegt;
eine vierte Antriebsbaugruppe (310), die mit der vierten beweglichen Masse gekoppelt und so eingerichtet ist, dass sie eine vierte alternative Antriebsbewegung in der vierten Antriebsrichtung erzeugt, wobei die vierte alternative Antriebsbewegung gegenüber der ersten alternativen Antriebsbewegung phasenentgegengesetzt ist; und
eine vierte elastische Antriebsstruktur (320), die mit der vierten beweglichen Masse und der vierten Antriebsbaugruppe gekoppelt ist, wobei die vierte elastische Antriebsstruktur in der vierten Antriebsrichtung starr ist, die so eingerichtet ist, dass sie die vierte alternative Antriebsbewegung auf die vierte bewegliche Masse überträgt, und in der vierten Erfassungsrichtung nachgiebig ist,
wobei:

die zweite bewegliche Masse (403B1) und die dritte bewegliche Masse (403A1) miteinander verbunden und monolithisch sind,
wobei die ersten, zweiten, dritten und vierten beweglichen Massen (403A1, 403B1, 403A2, 403B2) ein Giersensorabschnitt sind,
**dadurch gekennzeichnet, dass**
das MEMS-Gyroskop ferner einen Neigungs-/Wankerfassungsabschnitt umfasst, wobei der Neigungs-/Wankerfassungsabschnitt umfasst:

eine fünfte bewegliche Masse (303A1), wobei die fünfte bewegliche Masse so eingerichtet ist, dass sie sich in Bezug auf die feste Struktur (313) in einer fünften Antriebsrichtung parallel zu der ersten Antriebsrichtung und in einer fünften Erfassungsichtung quer zu der fünften Antriebsrichtung und zu der ersten Erfassungsrichtung bewegt; eine fünfte elastische Antriebsstruktur (323), die mit der fünften beweglichen Masse und mit der ersten Antriebsbaugruppe (310) gekoppelt ist, wobei die fünfte elastische Antriebsstruktur in der fünften Antriebsrichtung starr ist, die so eingerichtet ist, dass sie die erste alternative Antriebsbewegung auf die fünfte bewegliche Masse überträgt und in der fünften Erfassungsrichtung konform ist; eine sechste bewegliche Masse (303A2), wobei die sechste bewegliche Masse so eingerichtet ist, dass sie sich in Bezug auf die feste Struktur in einer sechsten Antriebsrichtung parallel zu der ersten Antriebsrichtung und in einer sechsten Erfassungsrichtung parallel zu der fünften Erfassungsrichtung bewegt; eine fünfte Antriebsbaugruppe (311), die mit der sechsten beweglichen Masse gekoppelt und so eingerichtet ist, dass sie eine fünfte alternative Antriebsbewegung in der sechsten Antriebsrichtung erzeugt, wobei die fünfte alternative Antriebsbewegung gegenüber der ersten alternativen Antriebsbewegung phasenentgegengesetzt ist; und eine sechste elastische Antriebsstruktur (323), die mit der sechsten beweglichen Masse und der fünften Antriebsbaugruppe (311) gekoppelt ist, wobei die sechste elastische Antriebsstruktur in der sechsten Antriebsrichtung starr ist, so eingerichtet, dass sie die fünfte alternative Antriebsbewegung auf die sechste bewegliche Masse überträgt, und in der sechsten Erfassungsrichtung nachgiebig ist.

2. MEMS-Gyroskop nach einem der vorhergehenden Ansprüche, das ferner Folgendes umfasst:

ein erstes elastisches Erfassungssystem (404, 326, 327), das die erste bewegliche Masse (403A1) mit der festen Struktur (313) koppelt und so eingerichtet ist, dass es Bewegungen der ersten beweglichen Masse in Bezug auf die feste Struktur in der ersten Antriebsrichtung und in der ersten Erfassungsrichtung zulässt; ein zweites elastisches Erfassungssystem (4404, 326327), das die zweite bewegliche Masse (403B1) mit der festen Struktur koppelt und so eingerichtet ist, dass es Bewegungen der zweiten beweglichen Masse in Bezug auf die feste Struktur in der zweiten Antriebsrichtung und in der zweiten Erfassungsrichtung zulässt.

3. MEMS-Gyroskop nach Anspruch 2, wobei:

das erste elastische Erfassungssystem eine erste Erfassungsmasse (404), eine erste elastische Erfassungsstruktur (326) und eine erste elastische Verankerungsstruktur (327) umfasst, wobei die erste elastische Erfassungsstruktur (326) zwischen der ersten beweglichen Masse (403A1) und der ersten Erfassungsmasse (404) gekoppelt und in der ersten Antriebsrichtung nachgiebig und in der ersten Erfassungsrichtung starr ist, wobei die erste elastische Verankerungsstruktur (327) zwischen der ersten Erfassungsmasse und der festen Struktur (313) gekoppelt ist und in der ersten Erfassungsrichtung nachgiebig ist; das zweite elastische Erfassungssystem eine zweite Erfassungsmasse (404A), eine zweite elastische Erfassungsstruktur (326) und eine zweite elastische Verankerungsstruktur (327) umfasst, wobei die zweite elastische Erfassungsstruktur (326) zwischen der zweiten beweglichen Masse (403B1) und der zweiten Erfassungsmasse (404A) gekoppelt und in der zweiten Antriebsrichtung nachgiebig und in der zweiten Erfassungsrichtung starr ist, wobei die zweite elastische Verankerungsstruktur (327) zwischen der zweiten Erfassungsmasse (404A) und der festen Struktur gekoppelt ist und in der zweiten Erfassungsrichtung nachgiebig ist; und die erste Erfassungsmasse und die zweite Erfassungsmasse an entsprechende Positionserfasungsstrukturen (322) gekoppelt sind.

4. MEMS-Gyroskop nach einem der vorhergehenden Ansprüche, das ferner Folgendes umfasst:

ein drittes elastisches Erfassungssystem (404A, 326, 327), das die dritte bewegliche Masse (403A2) mit der festen Struktur (313) koppelt und so eingerichtet ist, dass es Bewegungen der dritten beweglichen Masse in Bezug auf die feste Struktur in der dritten Antriebsrichtung und in der dritten Erfassungsrichtung zulässt; ein viertes elastisches Erfassungssystem (326, 327), das die vierte bewegliche Masse (403B2) mit der festen Struktur koppelt und so eingerichtet ist, dass es Bewegungen der vierten beweglichen Masse in Bezug auf die feste Struktur in der vierten Antriebsrichtung und in der vierten Erfassungsrichtung zulässt.

5. MEMS-Gyroskop nach Anspruch 4, wobei:

das dritte elastische Erfassungssystem eine dritte Erfassungsmasse (404B), eine dritte elastische Erfassungsstruktur (326) und eine dritte elastische Verankerungsstruktur (327) umfasst, wobei die dritte elastische Erfassungsstruktur (326) zwischen der dritten beweglichen Masse (403A2) und der dritten Erfassungsmasse gekoppelt und in der dritten Antriebsrichtung nachgiebig und in der dritten Erfassungsrichtung starr ist, wobei die dritte elastische Verankerungsstruktur (327) zwischen der dritten Erfassungsmasse und der festen Struktur gekoppelt ist und in der dritten Erfassungsrichtung nachgiebig ist;

das vierte elastische Erfassungssystem eine vierte Erfassungsmasse (404), eine vierte elastische Erfassungsstruktur (326) und eine vierte elastische Verankerungsstruktur (327) umfasst, wobei die vierte elastische Erfassungsstruktur (326) zwischen der vierten beweglichen Masse (403B2) und der vierten Erfassungsmasse gekoppelt und in der vierten Antriebsrichtung nachgiebig und in der vierten Erfassungsrichtung starr ist, wobei die vierte elastische Verankerungsstruktur (327) zwischen der vierten Erfassungsmasse und der festen Struktur gekoppelt ist und in der vierten Erfassungsrichtung nachgiebig ist; und

die dritte Erfassungsmasse und die vierte Erfassungsmasse an entsprechende Positionserfassungsstrukturen (322) gekoppelt sind.

6. MEMS-Gyroskop nach einem der Ansprüche 3 bis 5, ferner umfassend ein erstes Brückenelement (351A), das die erste und die zweite Erfassungsmasse (404, 404AB) miteinander koppelt, wobei das erste Brückenelement (351A) mit der festen Struktur (313) gekoppelt und um eine erste vertikale Achse drehbar ist, die quer zu der ersten Antriebsrichtung und zu der ersten Erfassungsrichtung verläuft.

7. MEMS-Gyroskop nach einem der vorhergehenden Ansprüche, wobei der Neigungs-/Wankerfassungsabschnitt Folgendes umfasst:

eine siebte bewegliche Masse (303B1), wobei die siebte bewegliche Masse so eingerichtet ist, dass sie sich in Bezug auf die feste Struktur (313) in einer siebten Antriebsrichtung parallel zu der ersten Antriebsrichtung und in einer siebten Erfassungsrichtung parallel zu der fünften Erfassungsrichtung bewegt;

eine sechste Antriebsbaugruppe (311), die mit der siebten beweglichen Masse gekoppelt und so eingerichtet ist, dass sie eine sechste alternative Antriebsbewegung in der siebten Antriebsrichtung erzeugt, wobei die sechste alternative Antriebsbewegung gegenüber der ersten alternativen Antriebsbewegung phasenentgegengesetzt ist;

eine siebte elastische Antriebsstruktur (323), die mit der siebten beweglichen Masse und mit der sechsten Antriebsbaugruppe (310) gekoppelt ist, wobei die siebte elastische Antriebsstruktur in der siebten Antriebsrichtung starr ist, so eingerichtet ist, dass sie die sechste alternative Antriebsbewegung auf die siebte bewegliche Masse überträgt, und in der siebten Erfassungsrichtung nachgiebig ist;

eine achte bewegliche Masse (303B2), wobei die achte bewegliche Masse so eingerichtet ist, dass sie sich in Bezug auf die feste Struktur in einer achten Antriebsrichtung parallel zu der ersten Antriebsrichtung und in einer achten Erfassungsrichtung parallel zu der fünften Erfassungsrichtung bewegt;

eine siebte Antriebsbaugruppe (310), die mit der achten beweglichen Masse gekoppelt und so eingerichtet ist, dass sie eine siebte alternative Antriebsbewegung in der achten Antriebsrichtung erzeugt, wobei die siebte alternative Antriebsbewegung gegenüber der ersten alternativen Antriebsbewegung phasenentgegengesetzt ist;

eine achte elastische Antriebsstruktur (323), die mit der achten beweglichen Masse und der siebten Antriebsbaugruppe gekoppelt ist, wobei die achte elastische Antriebsstruktur in der achten Antriebsrichtung starr ist, so eingerichtet ist, dass sie die siebte alternative Antriebsbewegung auf die achte bewegliche Masse überträgt, und in der achten Erfassungsrichtung nachgiebig ist.

8. MEMS-Gyroskop nach dem vorhergehenden Anspruch, wobei die fünfte und die sechste bewegliche Masse (303A1, 303A2) miteinander und monolithisch verbunden sind und wobei die siebte und die achte bewegliche Masse (303B1, 303B2) miteinander und monolithisch verbunden sind.

9. MEMS-Gyroskop nach Anspruch 7 oder 8, ferner umfassend eine fünfte elastische Verankerungsstruktur (352C), die die fünfte, die sechste, die siebte und die achte bewegliche Masse elastisch miteinander koppelt.

10. MEMS-Gyroskop nach einem der Ansprüche 7 bis 9, das ferner Folgendes umfasst:

eine neunte bewegliche Masse (303D), wobei die neunte bewegliche Masse so eingerichtet ist, dass sie sich in Bezug auf die feste Struktur (313) in einer neunten Antriebsrichtung parallel zu der ersten Antriebsrichtung und in einer neunten Erfassungsrichtung parallel zu der fünften Bewegungsrichtung bewegt;

eine neunte elastische Antriebsstruktur (323), die mit der neunten beweglichen Masse und der zweiten Antriebsbaugruppe (311) gekoppelt ist, wobei die neunte elastische Antriebsstruktur in der zweiten Antriebsrichtung starr ist, so eingerichtet ist, dass sie die zweite alternative Antriebsbewegung auf die neunte bewegliche Masse überträgt, und in der neunten Erfassungsrichtung nachgiebig ist; und

ein zweites Brückenelement (352A), das sich zwischen der fünften (303A1) und der neunten (303D) beweglichen Masse erstreckt, wobei das zweite Brückenelement mit der festen Struktur (313) gekoppelt und um eine zweite vertikale Achse drehbar ist, die quer zu der ersten Antriebsrichtung und parallel zu der fünften Erfassungsrichtung verläuft.

**Revendications**

1. Gyroscope MEMS (350) comprenant :

une structure fixe (313) ;

une première masse mobile (403A1), la première masse mobile étant configurée pour se déplacer par rapport à la structure fixe le long d'une première direction d'entraînement et le long d'une première direction de détection, transversale à la première direction d'entraînement ;

un premier ensemble d'entraînement (310), couplé à la première masse mobile et configuré pour générer un premier mouvement d'entraînement alternatif dans la première direction d'entraînement ;

une première structure élastique d'entraînement (320), couplée à la première masse mobile et au premier ensemble d'entraînement, la première structure élastique d'entraînement étant rigide dans la première direction d'entraînement, étant configurée pour transférer le premier mouvement d'entraînement alternatif à la première masse mobile et étant flexible dans la première direction de détection ;

une deuxième masse mobile (403B1), la deuxième masse mobile étant configurée pour se déplacer par rapport à la structure fixe dans une deuxième direction d'entraînement parallèle à la première direction d'entraînement et dans une deuxième direction de détection, parallèle à la première direction de détection ;

un deuxième ensemble d'entraînement (311), couplé à la deuxième masse mobile et configuré pour générer un deuxième mouvement d'entraînement alternatif dans la deuxième direction d'entraînement, le deuxième mouvement d'entraînement alternatif étant en opposition de phase par rapport au premier mouvement d'entraînement alternatif ; et

une deuxième structure élastique d'entraînement (320), couplée à la deuxième masse mobile et au deuxième ensemble d'entraînement, la deuxième structure élastique d'entraînement étant rigide dans la deuxième direction d'entraînement, configurée pour transférer le deuxième mouvement d'entraînement alternatif à la deuxième masse mobile, et flexible dans la deuxième direction de détection,

une troisième masse mobile (403A2), la troisième masse mobile étant configurée pour se déplacer par rapport à la structure fixe (313) dans une troisième direction d'entraînement, parallèle à la première direction d'entraînement, et dans une troisième direction de détection, parallèle à la première direction de détection ;

un troisième ensemble d'entraînement (311), couplé à la troisième masse mobile et configuré pour générer un troisième mouvement d'entraînement alternatif dans la troisième direction d'entraînement, le troisième mouvement d'entraînement alternatif étant en phase avec le deuxième mouvement d'entraînement alternatif ;

une troisième structure élastique d'entraînement (320), couplée à la troisième masse mobile et au troisième ensemble d'entraînement, la troisième structure élastique d'entraînement étant rigide dans la troisième direction d'entraînement, configurée pour transférer le troisième mouvement d'entraînement alternatif à la troisième masse mobile, et flexible dans la troisième direction de détection,

une quatrième masse mobile (403B2), la quatrième masse mobile étant configurée pour se déplacer par rapport à la structure fixe dans une quatrième direction d'entraînement, parallèle à la première direction d'entraînement, et dans une quatrième direction de détection, parallèle à la première direction de détection ;

un quatrième ensemble d'entraînement (310), couplé à la quatrième masse mobile et configuré pour générer un quatrième mouvement d'entraînement alternatif dans la quatrième direction d'entraînement, le quatrième mouvement d'entraînement alternatif étant en phase avec le premier mouvement d'entraînement alternatif ; et

une quatrième structure élastique d'entraînement (320), couplée à la quatrième masse mobile et au quatrième ensemble d'entraînement, la quatrième structure élastique d'entraînement étant rigide dans la quatrième direction d'entraînement, configurée pour transférer le quatrième mouvement d'entraînement alternatif à la quatrième masse mobile, et flexible dans la quatrième direction de détection,

dans lequel :

la deuxième masse mobile (403B1) et la troisième masse mobile (403A1) sont reliées et monolithiques entre elles,

dans lequel les première, deuxième, troisième et quatrième masses mobiles (403A1, 403B1, 403A2, 403B2) sont une partie de détection de lacet,

**caractérisé en ce que** le gyroscope MEMS comprend en outre une partie de détection de tangage/roulis, la partie de détection de tangage/roulis comprenant :

une cinquième masse mobile (303A1), la cinquième masse mobile étant configurée pour se déplacer par rapport à la structure fixe (313) dans une cinquième direction d'entraînement, parallèle à la première direction d'entraînement, et dans une cinquième direction de détection, transversale à la cinquième direction d'entraînement et à la première direction de détection ;

une cinquième structure élastique d'entraînement (323), couplée à la cinquième masse mobile et au premier ensemble d'entraînement (310), la cinquième structure élastique d'entraînement étant rigide dans la cinquième direction d'entraînement, configurée pour transférer le premier mouvement d'entraînement alternatif à la cinquième masse mobile, et flexible dans la cinquième direction de détection ;

une sixième masse mobile (303A2), la sixième masse mobile étant configurée pour se déplacer par rapport à la structure fixe dans une sixième direction d'entraînement, parallèle à la première direction d'entraînement, et dans une sixième direction de détection, parallèle à la cinquième direction de détection ;

un cinquième ensemble d'entraînement (311), couplé à la sixième masse mobile et configuré pour générer un cinquième mouvement d'entraînement alternatif dans la sixième direction d'entraînement, le cinquième mouvement d'entraînement alternatif étant en opposition de phase avec le premier mouvement d'entraînement alternatif ; et

une sixième structure élastique d'entraînement (323), couplée à la sixième masse mobile et au cinquième ensemble d'entraînement (311), la sixième structure élastique d'entraînement étant rigide dans la sixième direction d'entraînement, configurée pour transférer le cinquième mouvement d'entraînement alternatif à la sixième masse mobile, et flexible dans la sixième direction de détection.

2. Gyroscope MEMS selon la revendication précédente, comprenant en outre :

un premier système élastique de détection (404, 326, 327), couplant la première masse mobile (403A1) à la structure fixe (313) et configuré pour permettre les mouvements de la première masse mobile par rapport à la structure fixe dans la première direction d'entraînement et dans la première direction de détection ;

un deuxième système élastique de détection (4404, 326327), couplant la deuxième masse mobile (403B1) à la structure fixe et configuré pour permettre les mouvements de la deuxième masse mobile par rapport à la structure fixe dans la deuxième direction d'entraînement et dans la deuxième direction de détection.

3. Gyroscope MEMS selon la revendication 2, dans lequel :

le premier système élastique de détection comprend une première masse de détection (404), une première structure élastique de détection (326) et une première structure élastique d'ancrage (327), la première structure élastique de détection (326) étant couplée entre la première masse mobile (403A1) et la première masse de détection (404), flexible dans la première direction d'entraînement et rigide dans la première direction de détection, la première structure élastique d'ancrage (327) étant couplée entre la première masse de détection et la structure fixe (313) et flexible dans la première direction de détection ;

le deuxième système élastique de détection comprend une deuxième masse de détection (404A), une deuxième structure élastique de détection (326) et une deuxième structure élastique d'ancrage (327), la deuxième structure élastique de détection (326) étant couplée entre la deuxième masse mobile (403B1) et la deuxième masse de détection (404A), flexible dans la deuxième direction d'entraînement et rigide dans la deuxième direction de détection, la deuxième structure élastique d'ancrage (327) étant couplée entre la deuxième masse de détection (404A) et la structure fixe et flexible dans la deuxième direction de détection ; et

la première masse de détection et la deuxième masse de détection sont couplées à des structures de détection de position respectives (322).

4. Gyroscope MEMS selon l'une quelconque des revendications précédentes, comprenant en outre :

un troisième système élastique de détection (404A, 326, 327) couplant la troisième masse mobile (403A2) à la structure fixe (313) et configuré pour permettre les mouvements de la troisième masse mobile par rapport à la structure fixe dans la troisième direction d'entraînement et dans la troisième direction de détection ;

un quatrième système élastique de détection (326, 327), couplant la quatrième masse mobile (403B2) à la structure fixe et configuré pour permettre les mouvements de la quatrième masse mobile par rapport à la structure fixe dans la quatrième direction d'entraînement et dans la quatrième direction de détection.

**5.** Gyroscope MEMS selon la revendication 4, dans lequel :

le troisième système élastique de détection comprend une troisième masse de détection (404B), une troisième structure élastique de détection (326) et une troisième structure élastique d'ancrage (327), la troisième structure élastique de détection (326) étant couplée entre la troisième masse mobile (403A2) et la troisième masse de détection, flexible dans la troisième direction d'entraînement et rigide dans la troisième direction de détection, la troisième structure élastique d'ancrage (327) étant couplée entre la troisième masse de détection et la structure fixe et flexible dans la troisième direction de détection ;

le quatrième système élastique de détection comprend une quatrième masse de détection (404), une quatrième structure élastique de détection (326) et une quatrième structure élastique d'ancrage (327), la quatrième structure élastique de détection (326) étant couplée entre la quatrième masse mobile (403B2) et la quatrième masse de détection, flexible dans la quatrième direction d'entraînement et rigide dans la quatrième direction de détection, la quatrième structure élastique d'ancrage (327) étant couplée entre la quatrième masse de détection et la structure fixe et flexible dans la quatrième direction de détection ; et

la troisième masse de détection et la quatrième masse de détection sont couplées à des structures de détection de position respectives (322).

**6.** Gyroscope MEMS selon l'une quelconque des revendications 3 à 5, comprenant en outre un premier élément de pont (351A), couplant les première et deuxième masses de détection (404, 404AB), le premier élément de pont (351A) étant couplé à la structure fixe (313) et rotatif autour d'un premier axe vertical transversal à la première direction d'entraînement et à la première direction de détection.

**7.** Gyroscope MEMS selon l'une quelconque des revendications précédentes, dans lequel la partie de détection de tangage/roulis comprend en outre :

une septième masse mobile (303B1), la septième masse mobile étant configurée pour se déplacer par rapport à la structure fixe (313) dans une septième direction d'entraînement, parallèle à la première direction d'entraînement, et dans une septième direction de détection, parallèle à la cinquième direction de détection ;

un sixième ensemble d'entraînement (311), couplé à la septième masse mobile et configuré pour générer un sixième mouvement d'entraînement alternatif dans la septième direction d'entraînement, le sixième mouvement d'entraînement alternatif étant en phase avec le premier mouvement d'entraînement alternatif ;

une septième structure élastique d'entraînement (323), couplée à la septième masse mobile et au sixième ensemble d'entraînement (310), la septième structure élastique d'entraînement étant rigide dans la septième direction d'entraînement, configurée pour transférer le sixième mouvement d'entraînement alternatif à la septième masse mobile, et flexible dans la septième direction de détection ;

une huitième masse mobile (303B2), la huitième masse mobile étant configurée pour se déplacer par rapport à la structure fixe dans une huitième direction d'entraînement, parallèle à la première direction d'entraînement, et dans une huitième direction de détection, parallèle à la cinquième direction de détection ;

un septième ensemble d'entraînement (310), couplé à la huitième masse mobile et configuré pour générer un septième mouvement d'entraînement alternatif dans la huitième direction d'entraînement, le septième mouvement d'entraînement alternatif étant en phase avec le premier mouvement d'entraînement alternatif;

une huitième structure élastique d'entraînement (323), couplée à la huitième masse mobile et au septième ensemble d'entraînement, la huitième structure élastique d'entraînement étant rigide dans la huitième direction d'entraînement, configurée pour transférer le septième mouvement d'entraînement alternatif à la huitième masse mobile, et flexible dans la huitième direction de détection.

**8.** Gyroscope MEMS selon la revendication précédente, dans lequel les cinquième et sixième masses mobiles (303A1, 303A2) sont reliées entre elles et monolithiques et dans lequel les septième et huitième masses mobiles (303B1, 303B2) sont reliées entre elles et monolithiques.

**9.** Gyroscope MEMS selon la revendication 7 ou 8, comprenant en outre une cinquième structure élastique d'ancrage (352C) couplant de manière élastique les cinquième, sixième, septième et huitième masses mobiles.

**10.** Gyroscope MEMS selon l'une quelconque des revendications 7 à 9, comprenant en outre :

une neuvième masse mobile (303D), la neuvième masse mobile étant configurée pour se déplacer par rapport à la structure fixe (303) dans une neuvième direction d'entraînement, parallèle à la première direction d'entraînement, et dans une neuvième direction de détection, parallèle à la cinquième direction de détection ;

une neuvième structure élastique d'entraînement (323), couplée à la neuvième masse mobile et au deuxième ensemble d'entraînement (311), la neuvième structure élastique d'entraînement étant rigide dans la deuxième direction d'entraînement, configurée pour transférer le deuxième mouvement d'entraînement alternatif à la neuvième masse mobile, et flexible dans la neuvième direction de détection ; et

un deuxième élément de pont (352A) s'étendant entre les cinquième (303A1) et neuvième (303D) masses mobiles, le deuxième élément de pont étant couplé à la structure fixe (313) et rotatif autour d'un deuxième axe vertical, transversal à la première direction d'entraînement et parallèle à la cinquième direction de détection.

EP 4 300 040 B1

FIG. 1

FIG. 2

28

FIG. 3

FIG. 4

FIG. 5

FIG. 6

EP 4 300 040 B1

31

FIG. 7

FIG. 8

FIG. 9

FIG. 10

FIG. 11

EP 4 300 040 B1

FIG. 12

FIG. 13

EP 4 300 040 B1

G1

M1

E1

SF1

Co1

D1

Lin Vibr

Dr

R    S

## FIG. 14A

G2

M1

E1(+)    G2

SF1

Co1

D1

Lin Vibr

M2

SF2

Co2

D2

Dr

R    S

E2(-)

## FIG. 14B

G2

M1

E1(+)

SF1

Co1

D1

O

Rot Vibr

M2

SF2

Co2

D2

Dr

R    S

E2(-)

## FIG. 14C

FIG. 14D

FIG. 14E

FIG. 14F

FIG. 14G

FIG. 15

FIG. 16

FIG. 17

FIG. 18

FIG. 19

FIG. 20

FIG. 21

FIG. 22

FIG. 23A

FIG. 23B

FIG. 24

FIG. 25

EP 4 300 040 B1

FIG. 26

EP 4 300 040 B1

**EP 4 300 040 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 02066929 A

- DE 102007030119

**Non-patent literature cited in the description**

- **AJIT SHARMA et al.** A 104-dB Dynamic Range Transimpedance-Based CMOS ASIC for Tuning Fork Microgyroscopes. *IEEE Journal of Solid-State Circuits*, August 2007, vol. 42 (8)

- **ERDINC TATAR et al.** Quadrature-Error Compensation and Corresponding Effects on the Performance of Fully Decoupled MEMS Gyroscopes. *IEEE Journal of Microelectromechanical Systems*, June 2012, vol. 21 (3)